(19) **Europäisches Patentamt** / **European Patent Office** / **Office européen des brevets**

(11) **EP 4 614 140 A1**

(12) **EUROPEAN PATENT APPLICATION**

(43) Date of publication:
10.09.2025 Bulletin 2025/37

(51) International Patent Classification (IPC):
*G01N 27/623* (2021.01)

(21) Application number: 24161473.4

(22) Date of filing: 05.03.2024

(52) Cooperative Patent Classification (CPC):
G01N 27/623

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Tofwerk AG
3645 Thun (CH)

(72) Inventor: Graf, Stephan
3627 Heimberg (CH)

(74) Representative: Keller Schneider
Patent- und Markenanwälte AG
Eigerstrasse 2
Postfach
3000 Bern 14 (CH)

(54) **METHOD AND AN APPARATUS FOR DETERMINING A MOBILITY OF IONS**

(57) The invention relates to a method and an apparatus (1) for determining a mobility of ions. The method includes a step of modulating with an ion gate (2) an ion beam (6) to a modulated ion beam by operating the ion gate (2) according to a modulation function for generating the modulated ion beam. Furthermore, the method includes a step of passing the modulated ion beam through an ion separation region (3) for separating the ions of the modulated ion beam according to a mobility of the ions in that ions of the modulated ion beam having different mobilities take different times for passing the ion separation region (3). Additionally, the method includes a step of obtaining a signal of the modulated ion beam after the modulated ion beam has passed the ion separation region (3), and a step of calculating from the signal and at least one segment of the modulation function a second derivative with respect to time of a correlation of the at least one segment of the modulation function with the signal in order to determine the mobility of the ions.

The apparatus (1) includes the ion gate (2) which is operable according to the modulation function for generating from the ion beam (6) the modulated ion beam. The apparatus (1) further includes the ion separation region (3) through which the modulated ion beam is passable for separating the ions of the modulated ion beam according to the mobility of ions in that ions of the modulated ion beam having different mobilities take different times for passing the ion separation region (3). Furthermore, the apparatus (1) includes a detector (4) by which the signal of the modulated ion beam is obtainable after the modulated ion beam has passed the ion separation region (3) and a calculation unit (5) by which from the signal and the at least one segment of the modulation function the second derivative with respect to time of the correlation of the at least one segment of the modulation function with the signal is calculable in order to determine the mobility of the ions.

**Fig. 1a**

EP 4 614 140 A1

modulating an ion beam

passing the beam through an ion mobility separation

obtaining a signal

calculating second derivative of a correlation

# Fig. 1b

## Description

## Technical Field

The invention relates to a method and an apparatus for determining a mobility of ions.

## Background Art

Methods and apparatuses pertaining to the above mentioned technical field are known. Examples of such apparatuses include an ion gate, an ion separation region for separating ions according to their mobility and a detector for detecting the ions. Thereby, the ion gate is used to insert ions into the ion separation region in a controlled manner. The ions are then passed through the ion separation region for separating the ions according to their mobility. After having passed the ion separation region, the ions are detected by the detector. In this arrangement, the ion separation region is used to separate the ions according to their mobility in that ions having different mobilities take different times for passing the ion separation region. Thereby, the ion separation region can be constructed in different ways to achieve this separation of the ions according to their mobility.

For example, the ion separation region can be a drifting region. Such a drifting region forms a volume containing an inert gas of a certain pressure. With electrodes, an electrostatic field is generated in the drifting region for pulling the ions along an ion path through the drifting region. In this setup, collisions of the ions with the inert gas occur in the drifting region. Due to these collisions, those ions which have a higher mobility pass the ion separation region in a shorter time than those ions which have a lower mobility. Consequently, the ions are separated according to their mobility when passing the drifting region.

In another example, the ion separation region forms as well a volume containing an inert gas of a certain pressure. However, in contrast to a drifting region, an ion guide assembly like the one described in EP 3 561 853 A1 of Tofwerl< AG or like the one described in EP 4 095 525 A1 of Tofwerl< AG is arranged in the ion separation region for conveying the ions along a conveying path through the ion separation region. In operation, phase shifted radio frequency AC voltages are applied to conveying electrodes of the ion guide assembly in order to convey the ions along the conveying path as described in EP 3 561 853 A1 and EP 4 095 525 A1, respectively. Due to these phase shifted radio frequency AC voltages, a radio frequency AC potential wave is generated which is moving along the conveying path in the conveying direction for conveying the ions along the conveying path in the conveying direction. Thereby, due to collisions with the inert gas, those ions which have a higher mobility pass the ion separation region in a shorter time than those ions which have a lower mobility. Consequently, the ions are separated according to their mobility when passing the ion separation region.

Independent of how the ion separation region is designed and constructed in detail, in some of the known methods and apparatuses for determining a mobility of ions, bunches of ions are inserted by the ion gate into the ion separation region for separating the ions according to their mobilities. The ions of each bunch pass the ion separation region and are subsequently detected by the detector. Thereby, each time a bunch of ions is inserted into the ion separation region, a clock is started and the time is measured the ions require from when the clock was started to when they reach the detector and are detected by the detector.

Such methods and apparatuses are sometimes also referred to as single pulse methods and apparatuses. In such single pulse methods and apparatuses, the throughput of ions is limited because the minimal waiting time required between inserting two consecutive bunches of ions into the ion separation region is defined by the fact that the slowest ions of the first bunch of ions should not be overtaken by the fastest ions of the subsequent bunch of ions. In other words, the detector should detect all ions of one bunch of ions inserted into the ion separation region before the first ions of the subsequently inserted bunch of ions arrive at the detector.

One way to increase the throughput of ions in single pulse methods and apparatuses is to increase the number of ions per bunch of ions inserted into the ion separation region. This has however drawbacks. First, if the number of ions per bunch of ions becomes too large, the ions in the bunch separate additionally due to ion repulsion during passing the ion separation region. This results in a defocussing of the ions in space and time. In case the ion separation region comprises some radio frequency confinement electrodes or some radio frequency conveying electrodes, this may additionally lead to a socalled radio frequency heating and to an undesired fragmentation of the ions. The defocussing leads to a peak broadening in the obtained ion mobility spectra. This effect is also referred to as a coulombic broadening. The coulombic broadening leads to a reduced resolution with which the mobility of the ions can be determined. Second, if the number of ions per bunch of ions becomes too large, the detector can become saturated such that the detector no longer reliably provides a detector signal being proportional to the number of ions reaching the detector per time unit. Consequently, ratios of different ions having different ion mobilities can no longer be determined with accuracy. Third, if the number of ions per bunch of ions becomes too large, a saturation of the conveying mechanism for conveying the ions through the ion separation region may occur such that the ions are no longer reliably conveyed through the ion separation region. This as well reduces the accuracy with which the mobility of the ions can be determined and reduces the accuracy with which the ratios of different ions having different ion mobilities can be determined.

The coulombic broadening, the risk of a saturation of the ion separation region and the risk of a saturation of the detector can be reduced by increasing the length of the pulses while maintaining the same number of ions per pulse, e.g. by increasing the time duration during which the ion gate is open to insert one bunch of ions comprising a specific number of ions into the ion separation region. However, such an increasing of the length of the pulses ruins the resolution with which the mobility of the ions can be determined. Thus, in known single pulse methods and apparatuses, the throughput of ions and thus the sensitivity with which a sample can be analysed can be balanced against the resolution and the accuracy with which the mobility of the ions can be determined. However, it is not possible to improve at the same time the sensitivity with which a sample can be analysed and the resolution and the accuracy with which the mobility of the ions can be determined.

One way to overcome these drawbacks is to employ a so-called multiplexing. In such a multiplexing, an ion beam is modulated with an ion gate according to a modulation function to a modulated ion beam and inserted into the ion separation region. After having passed the ion separation region, the ions of the modulated ion beam are detected with a detector. This detector provides a time-dependent signal corresponding to the ions of the modulated ion beam reaching the detector. Then, a correlation of the modulation function with the signal is calculated for determining an ion mobility spectrum. One such method and one such apparatus are described for example in WO 2013/059947 A1 of Tofwerl< AG. Such multiplexing methods enable to achieve a duty cycle of about 50%.

Such methods and apparatuses for determining a mobility of ions employing a multiplexing remove the coulombic broadening even though the so-called diffusional broadening, an effect caused by the diffusion of the ions during passing the ion separation region, remains. Furthermore, such methods and apparatuses for determining a mobility of ions employing a multiplexing reduce the risk of saturating the conveying mechanism and reduce the risk of saturating the detector. However, the resolution of the ion mobility spectra obtained by calculating the correlation of the modulation function with the signal is limited by the resolution of the modulation function according to which the modulated ion beam is modulated by the ion gate. Consequently, the resolution of the modulation function limits the resolution with which the mobility of the ions can be determined.

To some extent, the resolution with which the mobility of the ions can be determined can be increased by increasing the resolution of the modulation function. However, since no known ion gate enables a perfect gating of the ions, the modulated ion beam will never have precisely the shape of the modulation function according to which the ion beam is modulated with the ion gate. For example, every ion gate requires some time to switch between a closed state in which it does not let pass any ions and an open state in which it allows the ions to pass. This causes imperfections in the shape of the modulated ion beam. Furthermore, depletion of ions in a region behind the ion gate and tailing of ions in the modulated ion beam cause imperfections in the shape of the modulated ion beam, too. Such imperfections in the ion gating lead to "*false peaks*" and "*false features*" in the calculated correlation of the modulation function with the signal as explained in WO 2013/059947 A1. To some extent, these "*false peaks*" and "*false features*" in the correlation can be dealt with. However, in case the resolution of the modulation function is increased too much, these "*false peaks*" and "*false features*" in the correlation become very strong and limit the accuracy with which the mobility of the ions can be determined, too.

In the present text, the formulation "and/or" is occasionally used for linking two features. This formulation is to be understood as either one of the two features or both of the features. Thus, "A and/or B" is to be understood as three equivalent options, wherein one option is A, another option is B and yet another option is both A and B.

## Summary of the invention

It is the object of the invention to create a method and an apparatus for determining the mobility of ions pertaining to the technical field initially mentioned, that enable an increased throughput of ions and thus an increased sensitivity with which a sample can be analysed as compared to the known single pulse methods and apparatuses and that enable at the same time to improve the resolution and the accuracy with which the mobility of the ions can be determined as compared to the known multiplexing methods and apparatuses.

The solution of the invention is specified by the features of claim 1. According to the invention, the method includes a step of modulating with an ion gate an ion beam to a modulated ion beam by operating the ion gate according to a modulation function for generating the modulated ion beam. Thereby, the modulation function is advantageously a time-dependent function. Independent of whether the modulation function is a time-dependent function or not, according to the invention, the method further includes a step of passing the modulated ion beam through an ion separation region for separating the ions of the modulated ion beam according to a mobility of the ions in that ions of the modulated ion beam having different mobilities take different times for passing the ion separation region, a step of obtaining a signal of the modulated ion beam after the modulated ion beam has passed the ion separation region, and a step of calculating from the signal and at least one segment of the modulation function a second derivative with respect to time of a correlation of the at least one segment of the modulation function with the signal in order to determine the mobility of said ions.

According to the invention, the modulated ion beam is passed through an ion separation region for separating the ions of the modulated ion beam according to a mobility of the ions in that ions of the modulated ion beam having different mobilities take different times for passing the ion separation region. In one example, the ion separation region is a drifting region like the one described in WO 2013/059947 A1 of Tofwerl< AG. In another example, the ion separation region is an ion separation region wherein the ions are conveyed with an ion guide assembly as described in EP 3 561 853 A1 of Tofwerl< AG along a conveying path through the ion separation region for separating the ions according to their mobility. In yet another example, the ion separation region is an ion separation region wherein the ions are conveyed with an ion guide assembly as described in EP 4 095 525 A1 of Tofwerl< AG along a conveying path through the ion separation region for separating the ions according to their mobility. However, the ion separation region is not limited to these three examples. Many other ways of how the ion separation region can be constructed are known.

According to the invention, a signal of the modulated ion beam is obtained after the modulated ion beam has passed the ion separation region. Thereby, the signal is advantageously obtained by detecting with a detector the ions of the modulated ion beam after the modulated ion beam has passed the ion separation region, wherein, based on the detected ions, the detector provides a signal of the detected ions. This signal is the signal of the modulated ion beam after the ion beam has passed the ion separation region. Advantageously, the signal is a time-dependent signal.

According to the invention, from the signal and at least one segment of the modulation function a second derivative with respect to time of a correlation of the at least one segment of the modulation function with the signal is calculated in order to determine the mobility of said ions. This calculation is advantageously performed by a calculation unit. Thereby, the at least one segment of the modulation function may be the entire modulation function or may be one single segment of the modulation function or may be two or more segments of the modulation function. In case of one single segment, the one single segment advantageously covers one continuous part of the modulation function. In case the at least one segment of the modulation function is more than one single segment, the at least one segment may be two or more segments of the modulation function. In this case, the two or more segments of the modulation function are advantageously overlap-free and spaced apart from each other by gaps.

The task of the invention is furthermore solved by an apparatus for determining a mobility of ions, in particular with the method according to the invention. This apparatus includes the ion gate which is operable according to the modulation function for generating from an ion beam the modulated ion beam, the ion separation region through which the modulated ion beam is passable for separating the ions of the modulated ion beam according to the mobility of the ions in that ions of the modulated ion beam having different mobilities take different times for passing the ion separation region, the detector by which the signal of the modulated ion beam is obtainable after the modulated ion beam has passed the ion separation region, and the calculation unit by which from the signal and the at least one segment of the modulation function the second derivative with respect to time of the correlation of the at least one segment of the modulation function with the signal is calculable in order to determine the mobility of the ions.

Advantageously, the ion gate is adapted to modulate the ion beam to the modulated ion beam when being operated according to the modulation function for generating the modulated ion beam.

Preferably, the ion separation region is adapted to separate the ions of the modulated ion beam according to the mobility of the ions in that ions of the modulated ion beam having different mobilities take different times for passing the ion separation region when the modulated ion beam is passed through the ion separation region.

Advantageously, the detector is adapted to detect the ions of the modulated ion beam after having passed the ion separation region and to provide the signal of the detected ions and thus of the modulated ion beam after the modulated ion beam has passed the ion separation region. Thus, advantageously, the signal of the modulated ion beam after the ion beam has passed the ion separation region is advantageously obtainable by the detector.

The calculation unit can be any unit enabling the calculation of the second derivative with respect to time of the correlation of the at least one segment of the modulation function with the signal. Advantageously, the calculation unit includes a processor for performing this calculation. For example, the calculation unit is a personal computer. The calculation unit can however be any other unit. It may be any type of computer, smart phone or even just a printed circuit board including a processor. Independent of how the calculation unit is constructed in detail, preferably, the calculation unit is adapted to calculate from the signal and the at least one segment of the modulation function the second derivative with respect to time of the correlation of the at least one segment of the modulation function with the signal in order to determine the mobility of the ions.

In an advantageous variant, the apparatus includes a control unit for controlling and thus operating the apparatus according to the invention to execute the method according to the invention. Thus, the control unit is advantageously adapted to control and thus operate the apparatus to execute the method according to the invention. Preferably, the control unit is adapted to control the ion gate, the ion separation region, the detector and the calculation unit. Thereby, the control unit may control the ion gate, the ion separation region, the detector and the calculation unit directly or indirectly via one or more control subunits. In the latter case, the apparatus advantageously includes the one or more control subunits. Advantageously, the control unit is at least a printed circuit board including a processer. The control unit may for example be a controller. In another example, the control unit is a personal computer. In this case, the personal computer being the control unit may be at the same time the calculation unit. Thereby, the functionality of the control unit and the calculation unit may be implemented as software running on the personal computer.

How the ion separation region is controllable and controlled by the control unit depends on how the ion separation region is constructed. In case the ion separation region forms a volume containing an inert gas of a certain pressure, the control unit may control a vacuum pump and/or one or more valves for maintaining the volume at the certain pressure of the inert gas. Furthermore, in case the ion separation region is a drifting region, the control unit may control the electrodes to generate an electrostatic field for pulling the ions along an ion path through the drifting region. In case an ion guide assembly like the one described in EP 3 561 853 A1 of Tofwerl< AG or an ion guide assembly like the one described in EP 4 095 525 A1 of Tofwerl< AG is arranged in the ion separation region for conveying the ions along a conveying path through the ion separation region, the control unit may be adapted to apply phase shifted radio frequency AC voltages to the conveying electrodes of the ion guide assembly in order to convey the ions along the conveying path as described in EP 3 561 853 A1 or EP 4 095 525 A1, respectively.

As an alternative to these variants, however, the apparatus may go without such a control unit. In such an alternative, the apparatus may be sold without a control unit. In this case, the apparatus may be controlled by a control unit separate from the apparatus. Such a separate control unit may again be a personal computer or any printed circuit board including a processor.

As known in the art, in multiplexing methods, the correlation of the modulation function according to which the ion gate is operated with the signal obtained with the detector from the ions of the modulated ion beam after having passed the ion separation region corresponds to a time of flight spectrum of the ions. Thus, since the ions having different mobilities require different times for passing the ion separation region, this time of flight spectrum provides information on the mobilities of the ions and thus enables determining the mobility of the ions. Thereby, this time of flight spectrum can be considered as an ion mobility spectrum. This ion mobility spectrum can be provided in any arbitrary time units. The apparatus can however as well be calibrated as known in the art such that the obtained time of flight spectra are ion mobility spectra having a specific calibration.

Thus, in the present invention, the calculated second derivative with respect to time of the correlation of the at least one segment of the modulation function with the signal corresponds to the second derivative with respect to time of an ion mobility spectrum. Therefore, the calculated second derivative with respect to time of the correlation of the at least one segment of the modulation function with the signal enables as well determining the mobility of the ions. Even more, calculating the second derivative with respect to time of the correlation of the at least one segment of the modulation function with the signal is thus as such a step of determining the mobility of the ions. Nonetheless, the calculated second derivative with respect to time of the correlation of the at least one segment of the modulation function with the signal may be further processed for improving the determination of the mobility of the ions. Examples and preferred variants of how the calculated second derivative with respect to time of the correlation of the at least one segment of the modulation function with the signal can be further processed in order to determine the mobility of the ions are provided in the present text.

As compared to single pulse methods and apparatuses, the method and apparatus according to the invention have the advantage that the throughput of ions can be increased without risking a coulombic broadening and without the risk of a saturation of the ion separation region and without the risk of a saturation of the detector. Thus, the sensitivity, with which the mobility of the ions can be determined is increased as compared to the known single pulse methods and apparatuses. At the same time, as compared to the known multiplexing methods and apparatuses, the method and apparatus according to the invention have the advantage that the resolution of the modulation function does not limit the resolution with which the mobility of the ions can be determined. Rather, the resolution with which the mobility of the ions can be determined is determined by the diffusional broadening only. And for the same throughput of ions, this loss in resolution is considerably smaller in the method and apparatus according to the invention than in single pulse methods and apparatuses where the obtainable resolution is determined by the combination of the coulombic broadening and the diffusional broadening. Consequently, the method and apparatus according to the invention enable to improve the resolution and the accuracy with which the mobility of the ions can be determined as compared to known multiplexing methods and apparatuses.

This outcome is surprising because calculating the second derivative of the measured time of flight of the ions in single pulse methods and apparatuses for determining the mobility of the ions does not increase the accuracy with which the mobility of the ions can be determined. Rather, in single pulse methods and apparatuses, in case the second derivative of the measured time of flight of the ions is calculated, the second derivative will show the peaks being separated into two peaks in case the diffusional and coulombic broadening become too small. Thus, when calculating the second derivative of the measured time of flight of the ions showing a lower broadening in single pulse methods and apparatuses, two peaks are obtained in the ion mobility spectra for ions having the same mass-to-charge ratio, reducing the accuracy with which the mobility of the ions can be determined. Surprisingly, such a doubling of the peaks is not observed in the method and apparatus according to the invention. Rather, the method and the apparatus according to the invention enable an increased throughput of ions and thus an increased sensitivity with which a sample can be analysed as compared to the known single pulse methods and apparatuses and enable at the same time to improve the resolution and the accuracy with which the mobility of the ions can be determined as compared to the known multiplexing methods and apparatuses.

Advantageously, when calculating from the signal and the at least one segment of the modulation function the second derivative with respect to time of the correlation of the at least one segment of the modulation function with the signal in order to determine the mobility of the ions, in the correlation of the at least one segment of the modulation function with the signal, the signal and the at least one segment of the modulation function are advantageously synchronised in time with respect to each other by considering the time when the signal is obtained as compared to when the ion gate is operated according to the modulation function. Thus, in the correlation of the at least one segment of the modulation function with the signal, advantageously the modulation function is considered as starting at a position of the modulation function at which position of the modulation function the ion gate is started being operated according to the modulation function and the modulation function is considered as starting at a time when the ion gate is started being operated according to the modulation function for generating the modulated ion beam, whereas the signal is considered to be shifted relative to the modulation function by the same amount of time with which the signal is effectively obtained after the ion gate is started being operated according to the modulation function for generating the modulated ion beam. Furthermore, in the correlation of the at least one segment of the modulation function with the signal, the modulation function is advantageously considered as having a speed in time corresponding to a speed with which the ion gate is operated according to the modulation function and the signal is considered as having a speed in time corresponding to a speed at which the signal is obtained. Of course, both the speed of the modulation function and the speed of the signal may be scaled by some factor, even though if so, advantageously both are scaled by the same factor.

Preferably the method includes a step of correlating a first derivative with respect to time of the at least one segment of the modulation function with the signal for calculating the second derivative with respect to time of the correlation of the at least one segment of the modulation function with the signal in order to determine the mobility of the ions.

Thus, in the apparatus, the calculation unit is advantageously adapted to correlate the first derivative with respect to time of the at least one segment of the modulation function with the signal for calculating the second derivative with respect to time of the correlation of the at least one segment of the modulation function with the signal in order to determine the mobility of the ions.

In this case, in the method advantageously, a derivative with respect to time of a result of the step of correlating the first derivative with respect to time of the at least one segment of the modulation function with the signal is calculated. This derivative of the result is the second derivative with respect to time of the correlation of the at least one segment of the modulation function with the signal in order to determine the mobility of the ions mirrored about the abscissa. Accordingly, in the apparatus advantageously, the calculation unit is further adapted to calculate a derivative with respect to time of a result of the step of correlating the first derivative with respect to time of the at least one segment of the modulation function with the signal. This derivative of the result is the second derivative with respect to time of the correlation of the at least one segment of the modulation function with the signal mirrored about the abscissa in order to determine the mobility of the ions.

In case the method includes the step of correlating the first derivative with respect to time of the at least one segment of the modulation function with the signal for calculating the second derivative with respect to time of the correlation of the at least one segment of the modulation function with the signal in order to determine the mobility of the ions, for correlating the first derivative with respect to time of the at least one segment of the modulation function with the signal, the signal and the first derivative with respect to time of the at least one segment of the modulation function are advantageously synchronised in time with respect to each other by considering the time when the signal is obtained as compared to when the ion gate is operated according to the modulation function. Thus, for correlating the first derivative with respect to time of the at least one segment of the modulation function with the signal, advantageously the first derivative of the modulation function is considered as starting at a position of the modulation function at which position of the modulation function the ion gate is started being operated according to the modulation function and the first derivative of the modulation function is considered as starting at a time when the ion gate is started being operated according to the modulation function for generating the modulated ion beam, whereas the signal is considered to be shifted relative to the first derivative of the modulation function by the same amount of time with which the signal is effectively obtained after the ion gate is started being operated according to the modulation function for generating the modulated ion beam. Furthermore, for correlating the first derivative with respect to time of the at least one segment of the modulation function and the signal, advantageously, the modulation function is considered as having a speed in time corresponding to a speed with which the ion gate is operated according to the modulation function and the signal is considered as having a speed in time corresponding to a speed at which the signal is obtained. Thus, the first derivative with respect to time of the modulation function is advantageously the first derivative with respect to time of the modulation function, the modulation having the speed at which the ion gate is operated according to the modulation function for modulating the ion beam to the modulated ion beam.

Of course, both the speed of the first derivative of the modulation function and the speed of the signal may be scaled by some factor, even though if so, advantageously both are scaled by the same factor.

Advantageously, the modulation function is a binary function. Accordingly, the modulation function can be represented by a row of bits. This has the advantage that it is simple to modulate the ion beam with the ion gate to the modulated ion beam by operating the ion gate according to the modulation function for generating the modulated ion beam. By operating the ion gate according to the modulation function, the ion beam can be modulated such that in flight direction of the ions, downstream of the ion gate right after the ion gate, the modulated ion beam has the shape of the modulation function or such that the modulated ion beam essentially has the shape of the modulation function. Thus, the shape of the modulated ion beam in the flight direction of the ions downstream of the ion gate right after the ion gate may slightly deviate from the modulation function being the binary function. For example, the ion gate may be controlled exactly according to the modulation function being the binary function. In this case, the ion gate may require some, even though very short, time to switch between an open state and a closed state representing the two states of the binary modulation function such that the shape of the modulated ion beam has some deviation from the modulation function being a perfect binary function. In another example, a control unit of the apparatus or separate from the apparatus may provide a control signal according to the modulation function being the binary function. This control signal may be fed to the ion gate for operating the ion gate according to the modulation function for generating the modulated ion beam from the ion beam. Thereby, the control signal may essentially consist of two different voltages representing the two different values of the modulation function being the binary function. Thereby, the control unit may require some, even though very short, time for switching between the two different voltages when providing the control signal. Thus, the control signal may have some deviation from the modulation function being a perfect binary function. Furthermore, the ion gate may require some, even though very short, time to switch between the open state and the closed state and/or may switch between the open state and the closed state according to the control signal including already some deviations from the modulation function being the perfect binary function. Thus, ultimately, the shape of the modulated ion beam downstream of the ion gate right after the ion gate may have some slight deviations from the modulation function being the perfect binary function.

In a variant, the modulation function is based on a binary function but provides smoothed steps between the bits of the binary function. This has the advantage that depletion of ions in a region behind the ion gate and tailing or diffusion of ions in the modulated ion beam can be taken into account for by adapting the modulation function to these effects in the modulated ion beam before calculating the second derivative of the correlation of the at least one segment of the modulation function with the signal. In a further variant, the modulation function is based on a binary function but is oversampled. That is, multiple measurements of the ions of the modulated ion beam after having passed the ion separation region are made with the detector during each "0" and "1" of the binary function. Alternatively, the modulation function is a non-binary function, which may also be oversampled. In such an alternative, the modulation function may be a continuous function which is continuously derivable, in particular which is continuously derivable twice.

In the following, there are passages where the modulation function is described as being a binary function or a sequence. In these passages, the modulation function may effectively be the described binary function or sequence. But it may as well be a function which is based on the described binary function or sequence. In the latter case, the modulation function may provide smoothed steps between the bits of the described binary function or sequence and/or may be oversampled.

Preferably, the modulation function is a binary function, wherein, for correlating the first derivative with respect to time of the at least one segment of the modulation function with the signal, the signal is evaluated at positions in time in the at least one segment of the modulation function, wherein the positions in time correspond to positions within the at least one segment of the modulation function at which the modulation function changes its value.

In this case, the modulation function is advantageously a binary function and the calculation unit is advantageously adapted to correlate the first derivative with respect to time of the at least one segment of the modulation function with the signal by evaluating the signal at positions of the modulation function in the at least one segment of the modulation function where the modulation function changes its value.

This has the advantage that calculating the second derivative with respect to time of the correlation of the at least one segment of the modulation function with the signal in order to determine the mobility of the ions requires less calculation power. Thus, the second derivative with respect to time of the correlation of the at least one segment of the modulation function with the signal in order to determine the mobility of the ions can be calculated faster and more efficient. Furthermore, this has the advantage that a less sophisticated calculation unit can be used for performing these calculations.

Particular advantageously, for correlating the first derivative with respect to time of the at least one segment of the modulation function with the signal, a sum over the signal at positions in time is calculated under consideration of a sign of the derivative of the modulation function at the respective positions, wherein the positions in time correspond to the positions within the at least one segment of the modulation function at which the modulation function jumps from its lower value to its higher value and/or the positions within the at least one segment of the modulation function at which the modulation function jumps from its higher value to its lower value. Thus, the formula

$$c(t) = \sum_{i=1}^{N} g_i s(t + \tau_i)$$

may be employed for correlating the first derivative with respect to time of the at least one segment of the modulation function with the signal, wherein c(t) is the correlation of the first derivative of the at least one segment of the modulation function with the signal $s(t)$, $N$ is the total number of changes in the value of the modulation function in the at least one segment of the modulation function, $\tau_i$ is the position of the $i^{th}$ change in the value of the modulation function in the at least one segment of the modulation function and wherein $g_i$ provides the value 1 in case the $i^{th}$ change in the value of the modulation function in the at least one segment of the modulation function is a change from the lower value to the higher value of the modulation function and the value -1 in case the $i^{th}$ change in the value of the modulation function in the at least one segment of the modulation function is a change from the higher value to the lower value of the modulation function. Thus $g_i$ provides a positive sign to the signal $s(t + \tau_i)$ in case the $i^{th}$ change in the value of the modulation function is a step up in the value of the modulation function and a negative sign to the signal $s(t + \tau_i)$ in case the $i^{th}$ change in the value of the modulation function is a step down in the value of the modulation function in order to consider the first derivative of the modulation function being the binary function. Thereby, the $i^{th}$ change in the value of the modulation function in the at least one segment of the modulation function may be a position within the at least one segment of the modulation function at which the modulation function jumps from its lower value to its higher value or may be a position within the at least one segment of the modulation function at which the modulation function jumps from its higher value to its lower value.

When using this formula, in case the derivative with respect to time of the result of the step of correlating the first derivative with respect to time of the at least one segment of the modulation function with the signal is calculated, advantageously, the first derivative with respect to time of $c(t)$ is calculated. This first derivative with respect to time of $c(t)$ is the second derivative with respect to time of the correlation of the at least one segment of the modulation function with the signal mirrored about the abscissa in order to determine the mobility of the ions.

In case $c(t)$ is calculated, in a first variant, the at least one segment of the modulation function is chosen such that all the positions $\tau_i$ where the value of the modulation function in the at least one segment of the modulation function changes are positions where the modulation function changes from its lower value to its higher value. In a variation of this first variant, the at least one segment of the modulation function is chosen such that all the positions $\tau_i$ where the value of the modulation function in the at least one segment of the modulation function changes are the positions where the modulation function changes from its lower value to its higher value after at least a minimal number of consecutive bits in the modulation function having the lower value. Thereby, the minimal number may be any positive integer number. In one example, the minimal number is 1. In another example, the minimal number is 2. In yet another example, the minimal number is 3. In yet another example, the minimal number is 4. In case the minimal number is 1, the at least one segment of the modulation function is chosen such that the positions $\tau_i$ where the value of the modulation function in the at least one segment of the modulation function changes are all the positions where the modulation function changes from its lower value to its higher value.

In a second variant, the at least one segment of the modulation function is chosen such that all the positions $\tau_i$ where the value of the modulation function in the at least one segment of the modulation function changes are positions where the modulation function changes from its higher value to its lower value. In a variation of this second variant, the at least one segment of the modulation function is chosen such that all the positions $\tau_i$ where the value of the modulation function in the at least one segment of the modulation function changes are the positions where the modulation function changes from its higher value to its lower value after at least a minimal number of consecutive bits in the modulation function having the higher value. Thereby, the minimal number may be any positive integer number. In one example, the minimal number is 1. In another example, the minimal number is 2. In yet another example, the minimal number is 3. In yet another example, the minimal number is 4. In case the minimal number is 1, the at least one segment of the modulation function is chosen such that the positions $\tau_i$ where the value of the modulation function in the at least one segment of the modulation function changes are all the positions where the modulation function changes from its higher value to its lower value.

In a third variant, the at least one segment of the modulation function is chosen such that all the positions $\tau_i$ where the value of the modulation function in the at least one segment of the modulation function changes are positions where the modulation function changes from one of its values to the other one of its values. In a variation of this third variant, the at least one segment of the modulation function is chosen such that the positions $\tau_i$ where the value of the modulation function in the at least one segment of the modulation function changes are the positions where the modulation function changes from its lower value to its higher value after a first minimal number of consecutive bits in the modulation function having the lower value and the positions where the modulation function changes from its higher value to its lower value after a second minimal number of consecutive bits in the modulation function having the higher value. Thereby, the first minimal number and the second minimal number both may be any positive integer number. Thereby, the first minimal number and the second minimal number may be the same or may differ from each other. In one example, the first minimal number is 3 while the second minimal number is 1. In another example, the first minimal number is 2 while the second minimal number is 3. In yet another one example, the first minimal number and the second minimal number are both 1. In yet another example, the first minimal number and the second minimal number are both 2. In yet another example, the first minimal number and the second minimal number are both 3. In yet another example, the first minimal number and the second minimal number are both 4. In case the first minimal number and the second minimal number are both 1, the at least one segment of the modulation function is chosen such that the positions $\tau_i$ where the value of the modulation function in the at least one segment of the modulation function changes are all the positions where the modulation function changes from one of its values to the other one of its values. Thus, in this latter case, the at least one segment of the modulation function is actually the entire modulation function. Thus, in this particular case, the step of correlating the first derivative with respect to time of the at least one segment of the modulation function with the signal for calculating the second derivative with respect to time of the correlation of the at least one segment of the modulation function with the signal in order to determine the mobility of the ions is effectively a step of correlating the first derivative with respect to time of the modulation function with the signal for calculating the second derivative with respect to time of the correlation of the at least one segment of the modulation function with the signal in order to determine the mobility of the ions. If subsequently, the first derivative of the obtained result is calculated, effectively, the second derivative with respect to time of the correlation of the modulation function with the signal mirrored about the abscissa is calculated in order to determine the mobility of the ions.

In a preferred alternative to the above mentioned variants, for calculating the second derivative with respect to time of the correlation of the at least one segment of the modulation function with the signal in order to determine the mobility of said ions, the correlation of the at least one segment of the modulation function with the signal is calculated, whereafter the second derivative with respect to time of the correlation is calculated. In this case, the sign of the result is advantageously changed in order to mirror the result about the abscissa. Without changing the sign, the minima in the resulting curve indicate the mobilities of the specific types of ions amongst the ions in the ion beam, while with changing the sign of the result, the maxima and thus peaks in the resulting curve indicate the mobilities of the specific types of ions amongst the ions in the ion beam.

In this case, the calculation unit is advantageously adapted to calculate the correlation of the at least one segment of the modulation function with the signal and to calculate the second derivative with respect to time of the correlation in order to calculate the second derivative with respect to time of the correlation of the at least one segment of the modulation function and the signal in order to determine the mobility of the ions. Thereby, the calculation unit may as well be adapted to change the sign of the result in order to mirror the result about the abscissa.

In a preferred variant of this alternative, the modulation function is a binary function as described above. In another variant, however, the modulation function may be a continuous function which is continuously derivable, in particular which is continuously derivable twice.

Advantageously an autocorrelation of the modulation function is a two-valued function. This means advantageously that the autocorrelation function has a peak at zero and a constant value at all other points.

Alternatively, however, the modulation function may be chosen such that the autocorrelation of the modulation function is not a two-valued function.

Preferably, the modulation function is a pseudorandom sequence. This has the advantage that the properties of the modulation function approximate the properties of a random sequence. Therefore, repetitions in the modulation function that would lead to additional peaks in the second derivative of the correlation of the at least one segment of the modulation function with the signal can be avoided if the length of the pseudorandom sequence is chosen accordingly. Furthermore, a pseudorandom sequence as a modulation function has the advantage that the modulation function can easily be generated like for example with a linear feedback shift register.

If the modulation function is a pseudorandom sequence of the type known as maximum length sequences or of a type that can be represented by one ore more maximum length sequences, it is advantageous to use a linear feedback shift register for generating the modulation function. In such a linear feedback shift register, a number of feedback patterns are possible, called tap sets of the linear feedback shift register. The number of possible tap sets depends on the length of the particular linear feedback shift register. The modulation function is generated with the linear feedback shift register by choosing a tap set and a set of initial values. The set of initial values is fed to the linear feedback shift register. Based on the set of initial values, the modulation function is then generated by the linear feedback shift register according to the tap set. Therefore, the modulation function depends on the tap set and on the set of initial values.

Thus, advantageously, the apparatus includes a linear feedback shift register by which a pseudorandom sequence is generatable for the use as the modulation function. Thereby, the linear feedback shift register may be implemented in the form of a software running on a computer like a personal computer. In case the apparatus includes the above mentioned control unit, the control unit is preferably adapted to control the linear feedback shift register.

In a variant, however, the modulation function is generated in a different way. For example, one or more known pseudorandom sequences or other modulation functions may be stored in a data store. For each measurement, a particular modulation function stored in the data store may be used.

In a further variant, the modulation function may be a different function than a pseudorandom sequence. For example, the modulation function may be a random sequence. This has the advantage that the function has the corresponding properties. Alternatively, the modulation function may be a non-random function.

Advantageously, the modulation function is a maximum length sequence, a GMW sequence, a Welch-Gong transformation sequence, a Quadratic residue sequence, a Sextic residue sequence, a Twin prime sequence, a Kasami power function sequence, a Hyperoval sequence or a sequence derived from 3 or 5 maximum length sequences. This has the advantage that the modulation function is a sequence with well known properties. In case the sequence is derived from 3 to 5 maximum length sequences, it may for example be obtained by adding up the content of corresponding bits of the 3 or 5 maximum length sequences. In that case, the addition of two 1s or of two 0s may result in a 0, while the addition of a 0 and a 1 or of a 1 and a 0 may result in a 1 (bitwise NAND operation).

As a variant, the modulation function may be a pseudorandom sequence which does not belong to one of these classes.

Preferably, if the modulation function is a binary function or a sequence, the modulation function has a length of more than 50 bits, preferably more than 100 bits, particular preferably more than 500 bits. This has the advantage that the modulation function is long enough to enable measurements where sufficient ions are being measured for determining the mobility of the ions from a large enough number of ions and thus with a statistic being high enough and meaningful. In an advantageous variant, the modulation function has a length of less than 1'000'000'000 bits.

Alternatively, the modulation function may have a length of 50 bits or less. This may be advantageous if the time of a measurement should be short and if there are sufficient ions available for determining the mobility of the ions from a large enough number of ions and thus with a statistic being high enough and meaningful. As well, the modulation function may have a length of 1'000'000'000 bits or more.

Advantageously, the method includes a step of enhancing edges of the signal with a filter by filtering the signal before calculating the second derivative with respect to time of the correlation of the at least one segment of the modulation function with the signal in order to determine the mobility of the ions. This has the advantage that the mobility of the ions can be determined with an improved resolution in that the second derivative with respect to time of the correlation of the at least one segment of the modulation function with the signal is sharpened. In this case, before the second derivative with respect to time of the correlation of the at least one segment of the modulation function with the signal is calculable by the calculation unit, advantageously a filter for enhancing edges of the signal is applicable by the calculation unit to the signal. Thus, the calculation unit is advantageously adapted to apply this filter to the signal for enhancing edges of the signal.

Alternatively, the method may go without the step of enhancing the edges of the signal with a filter before calculating the second derivative with respect to time of the correlation of the at least one segment of the modulation function with the signal. In this case, the calculation unit is not necessarily adapted to apply this filter to the signal for enhancing edges of the signal.

In case the edges of the signal are enhanced with a filter before calculating the second derivative with respect to time of the correlation of the at least one segment of the modulation function with the signal, advantageously, the filter is an n-element finite difference filter, edge enhancement filter, or a filter using a different type of sharpening algorithm. This has the advantage that an enhancing of the edges of the signal is obtained with a known sharpening algorithm which can be adjusted to the particular characteristics of the signal to be treated.

For example, in case the filter is an n-element finite difference filter and the signal is measured in bins having a specific width in time, the filter may comprise an algorithm having the form

$$F_i = 2nD_i - \sum_{j=i+1}^{i+n} D_j - \sum_{j=i-n}^{i-1} D_j \, ,$$

where $n$ is a measure for the width of the filter, $D_i$ is the size of the signal's $i^{th}$ bin and $F_i$ is the filter-value's $i^{th}$ bin. In order to obtain the filtered signal, each filter-value $F_i$ is

added to the corresponding bin $D_i$ of the measured signal. When doing so, it is possible to multiply the filter-values $F_i$ and/or the signal $D_i$ with a weight factor before adding the filter-values to the signal. For example, such a weight factor may be based on $n$, the width of the filter, with $0 <= n <= n_{max}$:

$$D_i^{\text{Filtered}} = \frac{1-n}{n_{max}} D_i + \frac{n}{n_{max}} F_i.$$

Of course, it is possible to use weight factors that are independent of the width of the filter as well. Furthermore, it is possible to flatten the signal $D_i$ before calculating the filter-value by convoluting the signal with a Gaussian or any other smoothing function. This may be advantageous because otherwise, noise in the signal may lead to errors in the filter-value.

If the signal is not measured in bins having a specific width in time but by storing for each measured ion (i.e. for each event) the time passed since a starting time, the signal may be rasterised to bins of a specific width in time before applying the filter. Alternatively, if for each event the time is stored which has passed since the starting time, the filter's algorithm may be adapted to take into account for the time differences between the individual events instead of assuming bins having a specific width in time. The parameter $n$ of the algorithm may then become a measure for the time interval within which events are considered when calculating a particular filter-value $F_i$.

In case the signal is measured or rasterised in bins having a specific width in time, it is advantageous that $n$, the number of bins considered, is adapted to the characteristics of the signal. If the filter should be calculated rapidly, it may be advantageous to choose $n$ to be 1. In this case, the filter becomes a Laplace filter. Otherwise, if the signal is neither measured in bins having a specific width in time nor rasterised accordingly, it is advantageous to adapt to the characteristics of the signal the time interval within which events are considered.

For example, in case the filter is an edge enhancement filter, it may comprise an algorithm where a blurred signal is calculated by convoluting the signal with a Gaussian, and where the difference between the signal and the blurred signal is added to the signal. Similar to the method of unsharp masking known from digital image processing, three parameters of the algorithm may be adapted according to the particular signal to be treated. First, the width of the Gaussian may be adapted. Second, before adding the difference to the signal, the difference may be multiplied by a weighting factor that is adapted to the particular signal. Third, a threshold parameter may be defined such that the filter is only applied if the parameter's value is above a certain threshold. For example, the threshold parameter may be the deviation of the blurred signal from the measured signal.

Advantageously, the method comprises an additional step of setting negative values of the calculated second derivative with respect to time of the correlation of the at least one segment of the modulation function with the signal to a value of zero or an arbitrary positive value. Thereby, in case for calculating the second derivative with respect to time of the correlation of the at least one segment of the modulation function with the signal, the correlation of the at least one segment of the modulation function with the signal is calculated, whereafter the second derivative with respect to time of the result is calculated, the sign of the result is changed before setting the negative values of the calculated second derivative with respect to time of the correlation of the at least one segment of the modulation function with the signal to a value of zero or an arbitrary positive value. Thereby, it is irrelevant whether the sign of the signal is changed before the correlation of the at least one segment of the modulation function with the signal is calculated, whether the sign of the at least one segment of the modulation function is changed before the correlation of the at least one segment of the modulation function with the signal is calculated, whether the sign of the correlation of the at least one segment of the modulation function with the signal is changed, whether the sign of the first derivative with respect to time of the correlation of the at least one segment of the modulation function with the signal is changed before the second derivative with respect to time is calculated or whether the sign of the second derivative with respect to time of the correlation of the at least one segment of the modulation function with the signal correlation is changed. In case for calculating the second derivative with respect to time of the correlation of the at least one segment of the modulation function with the signal, the first derivative with respect to time of the at least one segment of the modulation function has been correlated with the signal, however, the sign of the result is not needed to changed before setting the negative values of the calculated second derivative with respect to time of the correlation of the at least one segment of the modulation function with the signal to a value of zero or an arbitrary positive value.

This has the advantage that negative values in the second derivative with respect to time of the correlation of the at least one segment of the modulation function with the signal are omitted. This simplifies the identification of peaks in the second derivative with respect to time of the correlation of the at least one segment of the modulation function with the signal. This simplified identification of peaks simplifies the determination of the mobility of the ions from the second derivative with respect to time of the correlation of the at least one signal of the modulation function with the signal.

Alternatively, the method goes without the additional step of setting negative values of the calculated second derivative with respect to time of the correlation of the at least one segment of the modulation function with the signal to a value of zero or an arbitrary positive value.

In a first preferred variant, the steps of the method except calculating the second derivative with respect to time of the correlation of the at least one segment of the modulation function and the signal are repeated in cycles, wherein during each cycle, the ion beam is modulated to the modulated ion beam by operating the ion gate according to the modulation function for generating the modulated ion beam, wherein the modulated ion beam is passed through the ion separation region for separating the ions of the modulated ion beam according to the mobility of the ions in that ions of the modulated ion beam having different mobilities take different times for passing the ion separation region, wherein the signal of the modulated ion beam is obtained after the modulated ion beam has passed the ion separation region. Thereby, advantageously, for each repeated cycle, the signal of the modulated ion beam obtained after the modulated ion beam has passed the ion separation region during the respective repeated cycle is added to a total signal being the added signals obtained during executing the previous one or more cycles. Thus, the resulting total signal provides an improved statistic as compared to performing the steps of the method only once. Subsequently, the second derivative with respect to time of the correlation of the at least one segment of the respective modulation function with the total signal is calculated. When employing the method in this specific way, the ion beam is advantageously modulated to the modulated ion beam by operating the ion gate according to the uninterrupted repeated modulation function for generating the modulated ion beam. Thus, one could also say that an overall modulation function is generated by appending the modulation function several times after each other without introducing any dead times in between and that the ion beam is modulated to the modulated ion beam by operating the ion gate according to the overall modulation function for generating the modulated ion beam. In this case, the apparatus advantageously further includes a signal summation unit by which the total signal is calculable. Alternatively, the apparatus may not comprise such a signal summation unit.

In a second preferred variant, the steps of the method are repeated in cycles, wherein during each cycle, the ion beam is modulated to the modulated ion beam by operating the ion gate according to a different modulation function from a set of modulation functions for generating a different modulated ion beam, and wherein during each cycle, the second derivative with respect to time of the correlation of the at least one segment of the respective modulation function with the signal which is calculated during each one of the cycles is added to a total result in order to determine the mobility of the ions. This has the advantage that that noise and systematic errors in the obtained signal can be averaged out in the second derivative with respect to time of the correlation of the at least one segment of the modulation function with the signal by operating the ion gate according a different modulation function of a set of different modulation functions during each cycle and thus during repetition of the steps.

Advantageously, the apparatus includes a cycle control unit by which a repetition in cycles of steps is controllable, the steps including generating the modulated ion beam with the ion gate by operating the ion gate according to the modulation function, passing the modulated ion beam through the ion separation region, obtaining the signal with the detector and calculating with the calculation unit from the signal and the at least one segment of the modulation function the second derivative with respect to time of the correlation of the at least one segment of the modulation function with the signal in order to determine the mobility of the ions. Thereby, the apparatus advantageously includes a summation unit by which a total second derivative with respect to time of the correlation of the at least one segment of the modulation function with the signal is calculable in order to determine the mobility of the ions, the total second derivative with respect to time of the correlation of the at least one segment of the modulation function with the signal being a sum of the second derivative with respect to time of the correlation of the at least one segment of the modulation function with the signal calculated during the cycles. Thereby, it is possible that the summation unit is a separate unit or that it is included in the calculation unit. In both cases, the cycle control unit and the summation unit have the advantage that noise and systematic errors in the obtained signal can be averaged out in the second derivative with respect to time of the correlation of the at least one segment of the modulation function with the signal by operating the ion gate according to a different modulation function of a set of different modulation functions during each repetition of the steps.

In case the apparatus includes the above mentioned control unit, the control unit is preferably adapted to control the cycle control unit and the summation unit.

As a variant, the apparatus may comprise the cycle control unit and the summation unit, but the ion gate may be operable by the same modulation function throughout all repetitions. This has the advantage that the statistics of the signal and thus of the second derivative with respect to time of the correlation of the at least one segment of the modulation function with the signal may be improved.

Alternatively, the apparatus may not comprise such a cycle control unit or such a summation unit. Similarly, the method may go without the two above described repetition in cycles of steps of the method.

Advantageously, the apparatus includes an ion source for ionising a sample to ions, wherein the apparatus is for determining the mobility of these ions. Thereby, advantageously, the ion source is fluidly coupled to the ion gate such that ions generated with the ion source from the sample are transferable to the ion gate as the ion beam from which the modulated ion beam is generatable with the ion gate. Ion sources for ionising a sample to ions are known. Examples of such ion sources are chemical ionisation ion sources, electron ionisation ion sources, inductively-coupled plasma ion sources, microwave-induced plasma ion sources, glow discharge ion sources, atmospheric pressure photoionisation ionisation sources. Independent of the type of ion source used, the apparatus including an ion source for ionising a sample to ions provides the advantage that a sample can be analysed by determining the mobility of the ions obtainable from the sample.

Alternatively, the apparatus goes without an ion source for ionising a sample to ions. Such an alternative has the advantage that the apparatus can be constructed simpler. Such an alternative apparatus can be employed for determining the mobility of ions whenever the ions to be analysed for their mobility are already available. Or, the apparatus can be combined with an ion source for ionising a sample to ions as desired. Since different types of ion sources generate different ions from a sample like for example molecular ions or elemental ions, this provides more flexibility to the use of the apparatus because depending on the needs, another type of ion source can be combined with the apparatus.

Preferably, the detector is a mass analyser. This has the advantage that for the same ions being measured, the mobility of the ions and the mass-to-charge ratio of the ions can be determined.

In the context of mass analysers and methods for mass analysing ions, the term mass analysing is used for determining the mass analysed ions' mass-to-charge ratio, often referred to as m/q-ratio or shorter m/q. Often, the unit Th is used for indicating the mass to charge ratio of ions. Th is the abbreviation of Thomson, wherein one Thomson is one unified atomic mass unit divided by one elementary charge. One unified atomic mass unit is $1.66053906660 \times 10^{-27}$ kg, while one elementary charge is $1.602176634 \times 10^{-19}$ C. For mass analysing ions, the ions are separated according to their mass-to-charge ratio and by obtaining a so-called mass spectrum. Such a mass spectrum with its data points provides information on the distribution of the mass analysed ions with respect to the ions' mass-to-charge ratio. In order to provide this information, the data points are not required to express the exact number of ions having the respective mass-to-charge ratio or being within the particular range of mass per charge ratios assigned to the respective data point. Rather, it is sufficient for the data points to provide a number which is proportional to the exact quantity, thus indicating the number of ions. Thus, each data point in the mass spectrum may be a single number. In this case, each single number indicates the number of ions having a mass-to-charge ratio matching the particular mass-to-charge ratio or being within the particular range of particular mass-to-charge ratios assigned to the respective data point. In a variant, each data point in the mass spectrum may comprise two numbers. In this case, a first number of each data point indicates the number of ions having the mass-to-charge ratio matching the particular mass-to-charge ratio or being within the particular range of mass-to-charge ratios assigned to the respective data point, while a second number of each data point indicates the mass-to-charge ratio or range of mass-to-charge ratios the respective data point is assigned to.

Alternatively, if no ion mass spectrum is required, the detector may be a detector which only detects ions and does not mass analyse the ions. The latter case has the advantage that the apparatus is simpler and can be constructed cheaper.

In case the detector is a mass analyser, the mass analyser is preferably a time-of-flight mass analyser. This is advantageous because a time-of-flight mass analyser can optimally be combined with the apparatus for determining a mobility of ions because a time-of-flight mass analyser allows for measuring a large range of ion masses with a high scan rate. In a variant, the detector is a quadrupole mass analyser. This is advantageous if a small range of ion masses is to be determined, because a high scan rate of the quadrupole mass analyser may be obtained, thus providing a high scan rate of the detector. In a further variant, the detector is an ion trap mass analyser. Alternatively, the detector is a different type of mass analyser.

In case the modulation function is a binary function or a sequence and the detector is a mass analyser, the mass analyser preferably allows for determining ion mass spectra with a repetition rate that corresponds to the bit length of the modulation function. This has the advantage that the scan rate of the mass analyser is adapted to the apparatus for determining the mobility of the ions.

Advantageously, the mass analyser allows for determining ion mass spectra with a repetition rate that corresponds to a time resolution with which the mobility of the ions can be determined or to a fraction thereof. This has the advantage that the scan rate of the mass analyser is optimally adapted to the apparatus for determining the mobility of the ions. Alternatively, however, the mass analyser allows determining ion mass spectra with a different repetition rate.

Other advantageous embodiments and combinations of features come out from the detailed description below and the entirety of the claims.

**Brief description of the drawings**

The drawings used to explain the embodiments show:

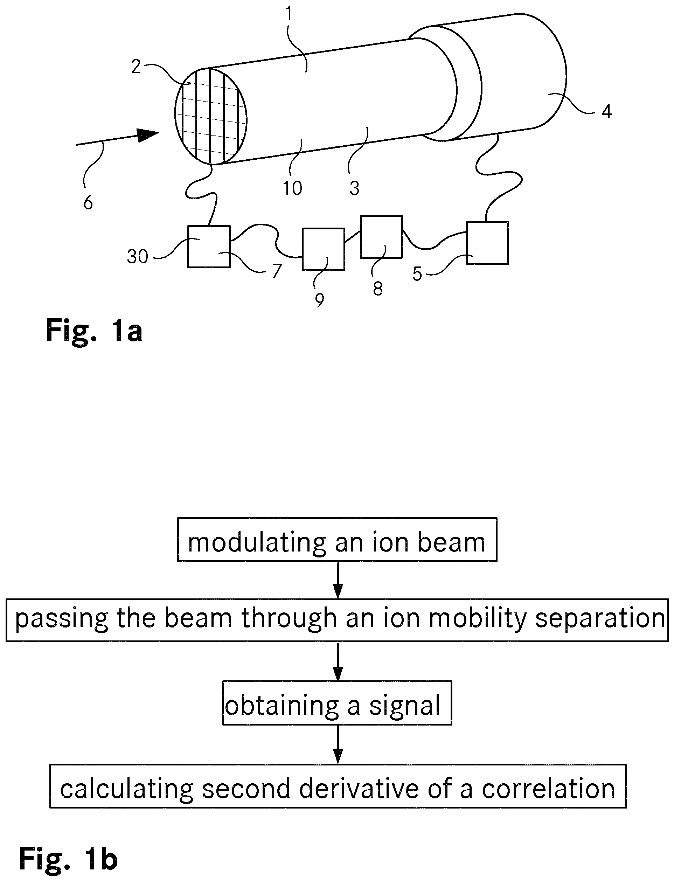

Fig. 1a, b          a schematic view of an apparatus according to the invention and a block diagram showing the steps of the method according to the invention, respectively,

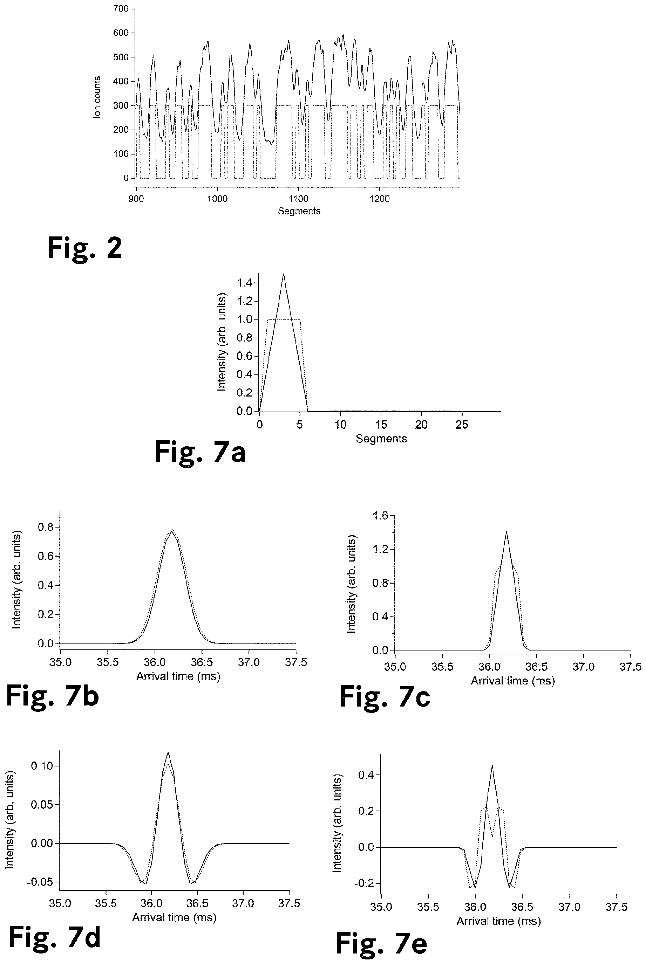

Fig. 2                an example of a modulation function being a binary function, more precisely a pseudorandom sequence, in comparison with a corresponding signal obtained from ions having a mass-to-charge ratio of 79 Th when operating an ion gate according to the shown ion modulation function,

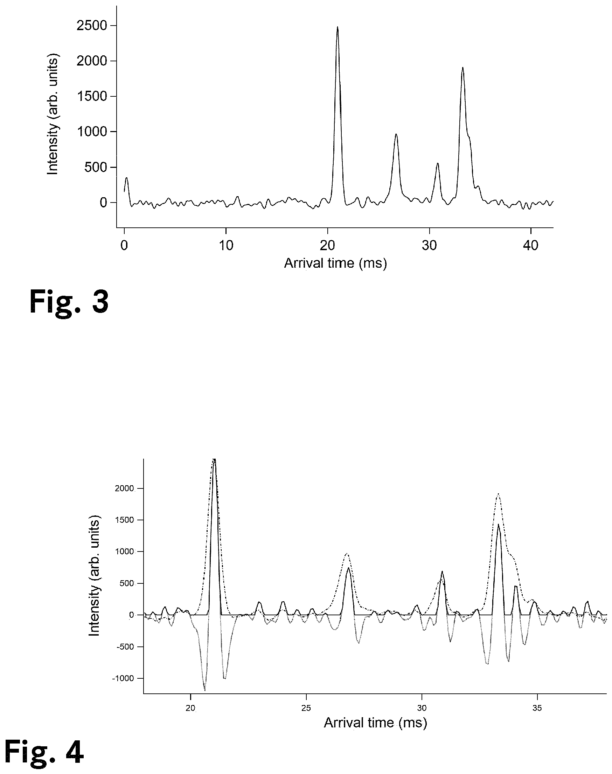

Fig. 3     an ion mobility spectrum being the correlation of a modulation function with the signal for different ions having a mass-to-charge ratio of 109 Th,

Fig. 4     a section of the ion mobility spectrum of Figure 3 in comparison with a first curve obtained with the method according to the invention and a second curve obtained with the method according to the invention, wherein the second curve is the first curve with the negative values being set to zero,

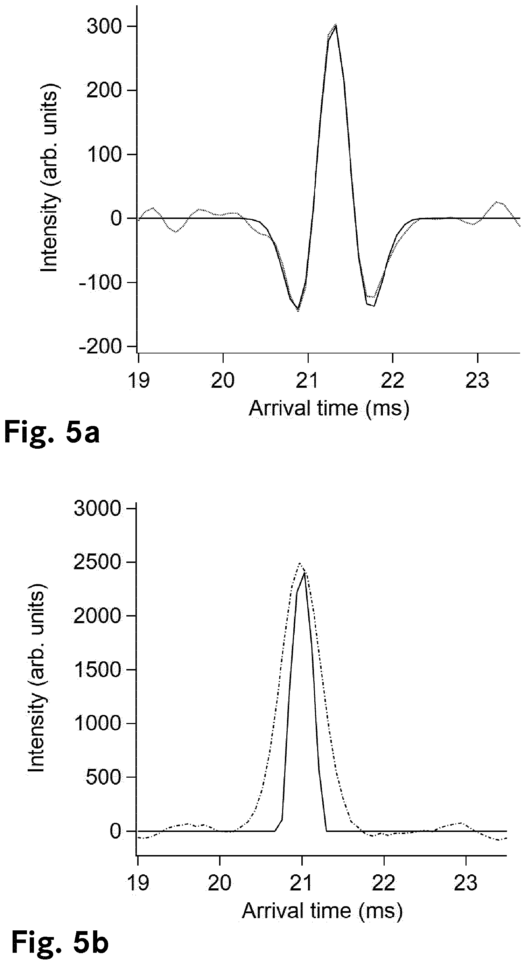

Fig. 5a, b     a section of the dotted line of Figure 4 being the first curve obtained with the method according to the invention in comparison with a curve shown as continuous line representing a model which is fitted to the dotted line, and the same section of the dash-dotted line of Figure 4 being the ion mobility spectrum in comparison with the second curve of Figure 4 obtained with the method according to the invention,

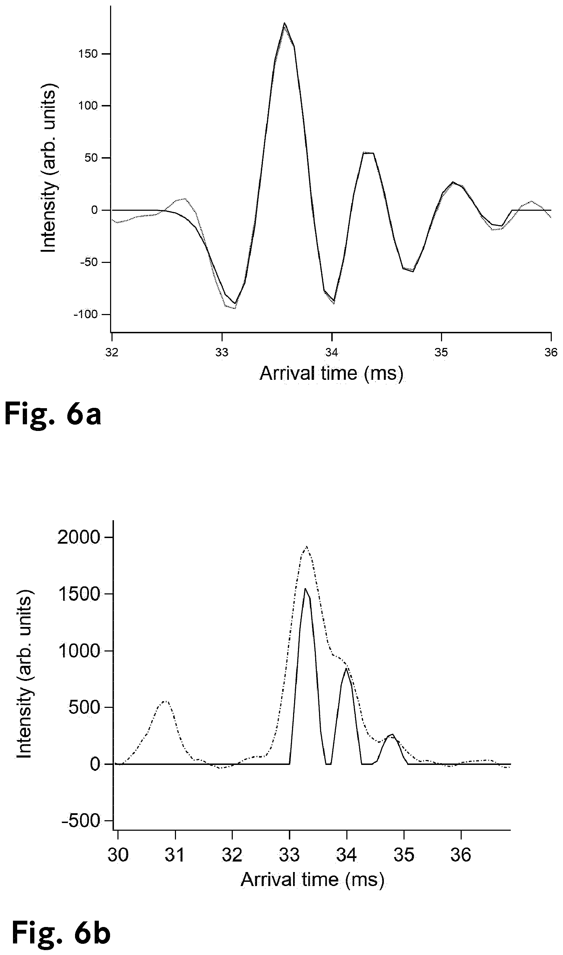

Fig. 6a, b     another section of the dotted line of Figure 4 being the first curve obtained with the method according to the invention in comparison with a curve shown as continuous line representing a model which is fitted to the dotted line, and this other section of the dash-dotted line of Figure 4 being the ion mobility spectrum in comparison with the second curve of Figure 4 obtained with the method according to the invention,

Fig. 7a to 7e     illustrate what happens if the second derivative of the measured time of flight of ions of one single type of ions is calculated in the case of a single pulse method, where the second derivative of a smeared rectangular shape is calculated, in comparison to what happens if for the same ions the second derivative with respect to time of the correlation of the at least one segment of the modulation function with the signal is calculated as it is done according to the present invention, where the second derivative of a smeared triangular shape is calculated.

In the figures, the same components are given the same reference symbols.

**Preferred embodiments**

Figure 1a shows a schematic view of an apparatus 1 according to the invention for determining a mobility of ions. This apparatus 1 may be used to execute a method according to the invention in order to determine the mobility of ions. Figure 1b shows a block diagram of this method, illustrating the individual steps of the method.

The apparatus 1 comprises an ion gate 2, an ion separation region 3, a detector 4, a calculation unit 5 and a control unit 7. The ion separation region 3 is confined by a tube 10. The ion gate 2 is arranged on an opposite end of the tube 10 than the detector 4. The ion gate 2 is of a known type. It comprises a grid of wires. If a voltage with opposite signs is applied to neighbouring wires of the grid, ions of an ion beam 6 are prevented of entering the tube 10. If there is no voltage applied to the wires of the grid, the ions of the ion beam 6 may enter the tube 10. The switching of the ion gate 2 is controlled by the control unit 7. The ion gate 2 may be switched between an open state, where ions may pass the ion gate 2 and a closed state, where ions are prevented of passing the ion gate 2. Thus, the ion gate 2 is operable according to a modulation function for generating from an ion beam 6 a modulated ion beam.

The ion separation region 3 is of a known type, too. The ion separation region 3 forms a volume defined by the tube 10 and contains an inert gas of a certain pressure and is controlled by the control unit 7. In one example, the ion separation region 3 is a drifting region as described in WO 2013/059947 A1 of Tofwerl< AG. In this example, the control unit 7 is adapted to control the electrodes to generate an electrostatic field for pulling the ions along an ion path through the drifting region. In another example, an ion guide assembly like the one described in EP 3 561 853 A1 of Tofwerl< AG is arranged in the ion separation region 3 for conveying the ions along a conveying path through the ion separation region 3. In this case the control unit 7 is adapted to apply phase shifted radio frequency AC voltages to the conveying electrodes of the ion guide assembly in order to convey the ions along the conveying path as described in EP 3 561 853 A1. In yet another example, an ion guide assembly like the one described in EP 4 095 525 A1 of Tofwerl< AG is arranged in the ion separation region 3 for conveying the ions along a conveying path through the ion separation region 3. In this case the control unit 7 is adapted to apply phase shifted radio frequency AC voltages to the conveying electrodes of the ion guide assembly in order to convey the ions along the conveying path as described in EP 4 095 525 A1.

Independent of how the ion separation region 3 is constructed and designed in detail, the ions passed through the ion separation region 3 take a time for passing the ion separation region 3 which time depends on the mobility of the ions. Thus, ions having different mobilities take different times for passing the separation region 3.

In operation of the apparatus 1, the ion beam 6 is modulated with the ion gate 2 to the modulated ion beam by operating the ion gate 2 according to the modulation function for generating the modulated ion beam. The modulated ion beam formed of the ions passing the ion gate 2 enters the tube 10 and is passed through the ion separation region 3 to the detector 4. Thereby, the ions of the modulated ion beam are separated according to the mobility of the ions in that ions of the modulated ion beam having different mobilities take different times for passing the ion separation region 3. After having passed the ion separation region 3, the ions of the modulated ion beam are detected by the detector 4. Thereby, the detector 4 provides a signal of the detected ions. This obtained signal is thus the signal of the modulated ion beam after the modulated ion beam has passed the ion separation region 3. This signal is passed to the calculation unit 5 for further processing.

The detector 4 for detecting the ions of the modulated ion beam after having passed the ion separation region 3 is of a known type, too. In the embodiment shown in Figure 1a, the detector 4 is a time-of-flight mass analyser. Such detectors are well known in the art. In variants, the detector 4 is another type of mass analyser like a quadrupole-mass analyser or any other type of ion detector which only detects ions and does not measure an ion mass spectrum.

In the embodiment of Figure 1a, the control unit 7 and the calculation unit 5 are implemented as a software running on a personal computer.

In a variant, the apparatus 1 further includes an ion source for generating the ions from a sample. These ions are then transferred in the form of the ion beam 6 to the ion gate 2 for being modulated to the modulated ion beam. Thus, in this variant, the apparatus 1 enables analysing a sample by determining the mobility of the ions obtained from the sample. If the detector 4 is thereby a mass analyser as mentioned above, the apparatus 1 enables analysing a sample by determining both, the mobility and the mass-to-charge ratio of the ions obtained from the sample. Thereby, the type of ionisation source can be chosen according to the needs for the analysis of the sample. As known in the art, different types of ion sources generate different ions from a sample like for example molecular ions or elemental ions. Examples of ion sources are chemical ionisation ion sources, electron ionisation ion sources, inductively-coupled plasma ion sources, microwave-induced plasma ion sources, glow discharge ion sources, atmospheric pressure photoionisation ionisation sources. Independent of the type of ion source, the control unit 7 is adapted to control the ion source, too.

In another variant, however, the apparatus 1 goes without ion source.

When performing a measurement for determining the mobility of the ions, the ion gate 2 is controlled by the control unit 7 to switch according to the modulation function. This modulation function is a binary function that may be represented as a sequence of bits having a value "1" or "0". A value "1" corresponds to the open state of the ion gate 2, while a "0" corresponds to the closed state of the ion gate 2. Thereby, the modulation function has a length of more than 50 bits. In a variant, the modulation function has a length of more than 100 bits. In another variant, the modulation function has a length of more than 500 bits. Independent of the length of the modulation function, the modulation function is chosen such that its autocorrelation is a two-valued function that has a peak at zero and otherwise a constant value. In one example, the modulation function is a pseudorandom sequence generated by a linear feedback shift register 30. In the embodiment shown in Figur 1a, the control unit 7 provides the liner feedback shift register 30. How this linear feedback shift register works is described in detail in WO 2013/059947 A1 of Tofwerl< AG.

In examples, modulation function is a maximum length sequence, a GMW sequence, a Welch-Gong transformation sequence, a Quadratic residue sequence, a Sextic residue sequence, a Twin prime sequence, a I<asami power function sequence, a Hyperoval sequence or a sequence derived from 3 or 5 maximum length sequences.

In operation of the apparatus 1, the ion beam 6 approaches the ion gate 2 as a continuous ion beam. When entering the tube 10, the ion beam 6 is modulated by the ion gate 2 to yield a modulated ion beam. In flight direction of the ions, right downstream of the ion gate 2, this modulated ion beam has a shape that corresponds to the modulation function. Thus, the ion gate 2 is operated by the control unit 7 according to the modulation function for generating the modulated ion beam from the ion beam 6. The ions of the modulated ion beam are then passed through the ion separation region 3 and reach the detector 4. The ions reaching the detector 4 are detected by the detector 4, wherein by the detector 4, a signal is obtained from the ions of the modulated ion beam after the modulated ion beam has passed the ion separation region 3. This signal is passed to the calculation unit 5, where from the signal and at least one segment of the modulation function a second derivative with respect to time of a correlation of the at least one segment of the modulation function with the signal is calculated in order to determine the mobility of the ions.

As known in the art, like for example from WO 2013/059947 A1 of Tofwerl< AG, the correlation of the modulation function with the signal corresponds to the ion mobility spectrum of the ions in the ion beam 6. As the autocorrelation of the modulation function is a two-valued function, the calculation of the correlation of the modulation function with the signal does not introduce additional features into the ion mobility spectrum. If, for example, the ion beam 6 comprises one single species of ions, all ions take the same time for passing the ion separation region 3. Accordingly, in an ideal measurement where the modulated ion beam has exactly the shape of the modulated function, the calculated correlation is a two-valued function like the autocorrelation of the modulation function. But in contrast to the autocorrelation, in the calculated correlation, the peak position indicates the ions' time of flight the ions require to pass from the ion gate 2 through the ion separation region 3 to reach the detector 4. From this time of flight of the ions, the mobility of the ions can be determined as it is known in the art.

Figure 2 shows an example of a modulation function in comparison with a corresponding signal obtained from ions having a mass-to-charge ratio of 79 Th when operating the ion gate 2 according to the shown ion modulation function being a binary function, more precisely a pseudorandom sequence. Thereby, the modulation function is shown as a dashed line, while the signal obtained with the detector 4 is shown as a continuous line. In the Figure, the axis of abscissas is provided in segments. Each segment corresponds to one data point in the signal obtained with the detector 4. These data points in the signal are equally distanced in time because the detector is a time-of-flight mass analyser obtaining mass spectra at a specific repetition rate. Thus, the duration in time of each segment is known, which means that the segments can be seen as representing a time unit. Thus, as such, the axis of abscissas is shown in time units. The axis of ordinate in the Figure is provided in ion counts detected with the detector 4 for ions having the mass-to-charge ratio of 79 Th.

In Figure 2, the modulation function is shown in the time units of the segments and scaled in arbitrary units such that bits of the binary function having the value "1" is shown as having the value of 300 ion counts, while bits of the binary function having the value "0" are shown as having the value of zero ion count.

Figure 3 shows an ion mobility spectrum being the correlation of the modulation function with the signal calculated from a measurement of ions having a mass-to-charge ratio of 109 Th. Thereby, the obtained intensity for a particular arrival time is proportional to the number of ions in the ion beam 6 having required the respective arrival time to pass from the ion gate 2 through the ion separation region 3 to reach the detector 4. This correlation shown in Figure 3 has been obtained with the method described in WO 2013/059947 A1 of Tofwerl< AG.

Figure 4 shows a section of the ion mobility spectrum of Figure 3 in comparison with two curves obtained with the method according to the invention. Thereby, in Figure 4, the section of the ion mobility spectrum of Figure 3 is showed as a dash-dotted line. The curve shown as the dotted line is the first curve obtained with the method according to the invention and is the second derivative with respect to time of the correlation of the at least one segment of the modulation function with the signal calculated with the calculation unit 5, mirrored about the abscissa. The curve shown as the continuous line is the second curve obtained with the method according to the invention and is the second derivative with respect to time of the correlation of the at least one segment of the modulation function and the signal with the negative values of the second derivative being set to zero.

In Figure 4, the intensity of the three curves is shown in arbitrary units versus the arrival time of the ions at the detector 4 in milliseconds. In these curves, the intensity for a particular arrival time is proportional to the number of ions in the modulated ion beam having required the respective arrival time to pass from the ion gate 2 through the ion separation region 3 to reach the detector 4. As can be seen from Figure 4, the curves obtained with the method according to the invention provide sharper peaks than the ion mobility spectrum being the correlation of the modulation function with the signal. This illustrates that the method and the apparatus 1 according to the invention enable determining the mobility of the ions with a higher resolution and accuracy than with known multiplexing methods and apparatuses.

In the example shown in Figure 4, for calculating the second derivative with respect to time of the correlation of the at least one segment of the modulation function with the signal in order to determine the mobility of the ions, in a step, a first derivative with respect to time of the at least one segment of the modulation function has been correlated with the signal. Thereafter, a derivative with respect to time of the result has been calculated in order to obtain the second derivative with respect to time of the correlation of the at least one segment of the modulation function with the signal mirrored about the abscissa in order to determine the mobility of the ions. This derivative with respect to time of the result is shown in Figure 4 as the dotted line. The continuous line shown in Figure 4 is the dotted line with the negative values being set to zero.

In the example shown in Figure 4, for correlating the first derivative with respect to time of the at least one segment of the modulation function with the signal, the signal and the first derivative with respect to time of the at least one segment of the modulation function have been synchronised in time with respect to each other by considering the time when the signal has been obtained as compared to when the ion gate has been operated according to the modulation function. Thus, for correlating the first derivative with respect to time of the at least one segment of the modulation function with the signal, the first derivative of the modulation function has been considered as starting at a position of the modulation function at which position of the modulation function the ion gate has been started being operated according to the modulation function and the first derivative of the modulation function has been considered as starting at a time when the ion gate has been started being operated according to the modulation function for generating the modulated ion beam, whereas the signal has been considered to be shifted relative to the first derivative of the modulation function by the same amount of time with which the signal has effectively been obtained after the ion gate has been started being operated according to the modulation function for generating the modulated ion beam. Thereby, for correlating the first derivative with respect to time of the at least one segment of the modulation function with the signal, the modulation function has been considered as having a speed in time corresponding to a speed with which the ion gate has been operated according to the modulation function and the signal has been considered as having a speed in time corresponding to a speed at which the signal has been obtained. Thus, the first derivative with respect to time of the modulation function is the first derivative with respect to time of the modulation function under consideration that the modulation has the speed at which the ion gate has been operated according to the modulation function for modulating the ion beam to the modulated ion beam.

In the example shown in Figure 4, the modulation function is a binary function. For correlating the first derivative with respect to time of the at least one segment of the modulation function with the signal, the signal has been evaluated at the positions in time in the modulation function at which the modulation function changes its value. More precisely, for correlating the first derivative with respect to time of the modulation function with the signal, a sum over the signal at the positions in time of the signal where the modulation function jumps from its lower value to its higher value and at the positions in time of the signal where the modulation function jumps from its higher value to its lower value has been calculated. Thereby, the derivative of the modulation function at the respective positions is considered with adapting the sign of the respective summand to be positive at the positions in time which correspond to where the modulation function jumps from its lower value to its higher value and with adapting the sign of the respective summand to be negative at the positions in time which correspond to where the modulation function jumps from its higher value to its lower value. In other words, the formula

$$c(t) = \sum_{i=1}^{N} g_i s(t + \tau_i)$$

has been employed. In this formula, c(t) is the correlation of the first derivative of the modulation function with the signal $s(t)$, $N$ is the total number of changes in the value of the modulation function and $\tau_i$ is the position in time of the $i$th change in the value of the modulation function. $g_i$ provides the value 1 in case the $i$th change in the value of the modulation function is a change from the lower value to the higher value of the modulation function and the value -1 in case the $i$th change in the value of the modulation function is a change from the higher value to the lower value of the modulation function. Thus $g_i$ provides a positive sign to the signal $s(t + \tau_i)$ in case the $i$th change in the value of the modulation function is a step up in the value of the modulation function and a negative sign to the signal $s(t + \tau_i)$ in case the $i$th change in the value of the modulation function is a step down in the value of the modulation function in order to consider the first derivative of the modulation function being the binary function.

Once the correlation c(t) of the first derivative of the modulation function with the signal $s(t)$ has been calculated, the first derivative with respect to time of c(t) has been calculated. This first derivative with respect to time of $c(t)$ is the second derivative with respect to time of the correlation of the at least one segment of the modulation function with the signal mirrored about the abscissa in order to determine the mobility of the ions which is shown in Figure 4 as the dotted line.

For obtaining the dotted line in Figure 4, the signal has been evaluated at the positions in time where the modulation function changes its value. Therefore, when considering small segments of the modulation function, wherein each segment extends across one of the positions in time of the modulation function where the modulation function changes its value, one can say that the signal is evaluated at the positions in time in a set of segments of the modulation function and thus in at least one segment of the modulation function, wherein the positions in time correspond to the positions within the segments of the modulation function at which the modulation function changes its value.

There are as well other ways of how the second derivative with respect to time of the correlation of the at least one segment of the modulation function with the signal can be calculated in order to determine the mobility of the ions than the way explained with respect to the dotted line in Figure 4. For example, the correlation of the first derivative of the at least one segment of the modulation function with the signal can be calculated for less segments of the modulation function. For example, the segments of the modulation function is chosen such that they only cover the positions of the modulation function where the modulation function jumps from its lower value to its higher value. In this case, the above mentioned sum is calculated only over the signal at the positions in time of the signal where the modulation function jumps from its lower value to its higher value. In another example, the segments of the modulation function is chosen such that they only cover the positions of the modulation function where the modulation function jumps from its higher value to its lower value. In this case, the above mentioned sum is calculated only over the signal at the positions in time of the signal where the modulation function jumps from its higher value to its lower value and carries a negative sign. In another example, the at least one segment of the modulation function is chosen such that all the positions $\tau_i$ where the value of the modulation function in the at least one segment of the modulation function changes are positions where the modulation function changes from one of its values to the other one of its values. In yet another example, the at least one segment of the modulation function is chosen such that the positions $\tau_i$ where the value of the modulation function in the at least one segment of the modulation function changes are the positions where the modulation function changes from its lower value to its higher value after a first minimal number of consecutive bits in the modulation function having the lower value and the positions where the modulation function changes from its higher value to its lower value after a second minimal number of consecutive bits in the modulation function having the higher value. Thereby, the first minimal number and the second minimal number may be the same or may differ from each other. In one example, the first minimal number is 3 while the second minimal number is 1. In another example, the first minimal number is 2 while the second minimal number is 3. In yet another one example, the first minimal number and the second minimal number are both 1. In yet another example, the first minimal number and the second minimal number are both 2. In yet another example, the first minimal number and the second minimal number are both 3. In yet another example, the first minimal number and the second minimal number are both 4.

In yet another way of how the second derivative with respect to time of the correlation of the at least one segment of the modulation function with the signal can be calculated by the calculation unit 5 in order to determine the mobility of the ions is to calculate the correlation of the at least one segment of the modulation function with the signal and subsequently to calculate the second derivative with respect to time of the correlation. In this case, advantageously, the sign of the result is changed in order to mirror the result about the abscissa. Without changing the sign, the minima in the resulting curve indicate the mobilities of the specific types of ions amongst the ions in the ion beam, while with changing the sign of the result, the maxima and thus peaks in the resulting curve indicate the mobilities of the specific types of ions amongst the ions in the ion beam. When calculating the correlation of the at least one segment of the modulation function with the signal and subsequently calculating the second derivative with respect to time of the correlation, the signal and the at least one segment of the modulation function are synchronised in time with respect to each other by considering the time when the signal is obtained as compared to when the ion gate is operated according to the modulation function. More precisely, in the correlation of the at least one segment of the modulation function with the signal, the modulation function is considered as starting at a position of the modulation function at which position of the modulation function the ion gate is started being operated according to the modulation function and the modulation function is considered as starting at a time when the ion gate is started being operated according to the modulation function for generating the modulated ion beam, whereas the signal is considered to be shifted relative to the modulation function by the same amount of time with which the signal is effectively obtained after the ion gate is started being operated according to the modulation function for generating the modulated ion beam. Thereby, in the correlation of the at least one segment of the modulation function with the signal, the modulation function is considered as having a speed in time corresponding to a speed with which the ion gate is operated according to the modulation function and the signal is considered as having a speed in time corresponding to a speed at which the signal is obtained.

In either way described above of how the second derivative with respect to time of the correlation of the signal and the at least one segment of the modulation function can be calculated by the calculation unit 5 in order to determine the mobility of the ions, the modulation function is a binary function having autocorrelation which is a two-valued function that has a peak at zero and otherwise a constant value. In a variant however, the modulation function is a binary function which does not have an autocorrelation which is a two-valued function. In yet another variant, the modulation function is not a binary function but a continuously derivable function. In such a variant, it is as well possible to correlate the first derivative with respect to time of the modulation function with the signal and subsequently to calculate the first derivative with respect to time of the result in order to calculate from the signal and at least one segment of the modulation function the second derivative with respect to time of the correlation of the at least one segment of the modulation function with the signal in order to determine the mobility of the ions. In this case, however, the before mentioned formula

$$c(t) = \sum_{i=1}^{N} g_i s(t + \tau_i)$$

becomes

$$c(t) = \int \frac{dg(\tau)}{d\tau} \, s(t + \tau) d\tau$$

with $\frac{dg(\tau)}{d\tau}$ being the first derivative with respect to time of the modulation function $g(t)$, wherein the integral is calculated over the at least one segment of the modulation function g(t). Alternatively, with the modulation function being a continuously derivable function, it is as well possible to calculate with the calculation unit 5 first the correlation of the at least one segment of the modulation function with the signal and to calculate subsequently the second derivative with respect to time of the obtained correlation.

Figure 5a shows a section of the dotted line of Figure 4 in comparison with a curve shown as continuous line representing a model fitted to the dotted line. As in Figure 4 already, the dotted line in Figure 5a is the second derivative with respect to time of the correlation of the at least one segment of the modulation function with the signal calculated with the calculation unit 5 as described above. Thereby, the section of the dotted line shown in Figure 5a shows one peak being the mobility of one specific type of ions from the analysed sample.

The continuous line in Figure 5a represents a model that is fitted to the dotted line. Thereby, the fitted continuous line is a positive Gaussian curve superposed with two negative Gaussian curves on both sides of the positive Gaussian curve. These Gaussian curves are scaled relative to each other such that all three Gaussian curves have a same variance $\sigma^2$, such that both negative Gaussian curves have a same size, while the areas between the two negative Gaussian curves and the horizontal line at zero intensity added together are as big as the area between the positive Gaussian curve and the horizontal line at zero intensity. Furthermore, these three Gaussian curves are positioned relatively to each other such that for each one of the two negative Gaussian curves, a position of the minimum of the respective negative Gaussian curve is distanced from the position of the maximum of the positive Gaussian curve by a time being the minimum bin with of the modulation function being the binary function. Apart from this scaling of the Gaussian curves relative to each other, the size of the combined Gaussian curves and the width of the Gaussian curves has been fitted to the dotted line being the second derivative with respect to time of the correlation of the at least one segment of the modulation function with the signal. As result of this fit, the position of the maximum of the fitted curve being the position of the maximum of the positive Gaussian curve is the peak position of the mobility of the specific type of ions from the analysed sample. The variance $\sigma^2$ of the Gaussian curves corresponds to the diffusional broadening the ions of the specific type of ions have obtained during passing the ion separation region 3.

As can be seen from Figure 5a, this model of three Gaussian curves being scaled relative to each other represents very well one type of ions in the curve being the second derivative with respect to time of the correlation of the at least one segment of the modulation function with the signal.

Figure 5b shows a section of the dash-dotted line and the continuous line of Figure 4, whereby in Figure 5b, the range of shown arrival times is the same as in Figure 5a. In Figure 5b, the curve shown as dash-dotted line is again the ion mobility spectrum being the correlation of the modulation function with the signal. The curve shown as continuous line is again the second derivative with respect to time of the correlation of the at least one segment of the modulation function with the signal with the negative values of the second derivative being set to zero as described already. Thus, the continuous line of Figure 5b is the continuous line of Figure 5a with the negative values being set to zero. The dash-dotted line however is ion mobility spectrum being the correlation calculated from the modulation function with the signal for ions as explained in the context of Figure 3.

Figure 6a shows another section of the dotted line of Figure 4 in comparison with a curve shown as continuous line which is a model fitted to the dotted line. As in Figure 4 and Figure 5a already, the dotted line in Figure 6a is the second derivative with respect to time of the correlation of the at least one segment of the modulation function with the signal calculated with the calculation unit 5 as described above. Thereby, the section of the dotted line shown in Figure 6a shows three peaks being the mobility of three different types of ions from the analysed sample.

The continuous line in Figure 6a is a model that is fitted to the dotted line. Thereby, for each one of the three different types of ions, a model of three Gaussian curves, i.e. one positive Gaussian curve superposed with two negative Gaussian curves on both sides of the positive Gaussian curve has been used as explained in the context of Figure 5a for one specific type of ions. Thereby, for each type of ions, the respective three Gaussian curves have been scaled relative to each other as explained in the context of Figure 5a. However, as the dotted line in Figure 6a shows three peaks being the mobility of three different types of ions, in Figure 6a, the model used is the superposition of three such models. Thus, the fitted continuous line of Figure 6a consists in total of three positive Gaussian curves and six negative Gaussian curves. As result of this fit, the three maximum positions in the curve represent the mobilities of the three types of ions from the analysed sample. These three maximum positions are given by the positions of the maxima of the three positive Gaussian curves. Furthermore, the variances $\sigma^2$ of the three Gaussian curves of each one of the three models for the three types of ions corresponds to the diffusional broadening of the ions of the respective type of ions.

Figure 6b shows a section of the dash-dotted line and the continuous line of Figure 4, whereby in Figure 6b, the range of shown arrival times is the same as in Figure 6a. In Figure 6b, the curve shown as dash-dotted line is again the ion mobility spectrum being the correlation calculated from the modulation function and the signal for ions as explained in the context of Figure 4. The curve shown as continuous line is again the second derivative with respect to time of the correlation of the at least one segment of the modulation function with the signal with the negative values of the second derivative being set to zero as described above. Thus, in Figure 6b, the continuous line is the continuous line of Figure 6a with the negative values being set to zero. As illustrated by the comparison of the dash-dotted line with the continuous line in Figure 6b, the method according to the invention enables to distinguish and thus to resolve peaks of different types of ions having different mobilities considerably better than with simply calculating the correlation of the modulation function and the signal as known in the art. This illustrates how the method and the apparatus 1 according to the invention enable to improve the resolution and the accuracy with which the mobility of the ions can be determined as compared to known multiplexing methods and apparatuses. At the same time, as compared to single pulse methods and apparatuses, the method and apparatus 1 according to the invention have the advantage that the throughput of ions can be increased without risking a large coulombic broadening and without the risk of a saturation of the ion separation region and without the risk of a saturation of the detector. Thus, with the method and the apparatus 1 according to the invention, the sensitivity, with which the mobility of the ions can be determined is increased as compared to the known single pulse methods and apparatuses.

These advantages of the apparatus 1 and the method according to the invention where the second derivative with respect to time of the correlation of the at least one segment of the modulation function and the signal is calculated in order to determine the mobility of the ions is surprising. Calculating the second derivative with respect to time of the correlation of the at least one segment of the modulation function and the signal in order to determine the mobility of the ions enables to improve the accuracy with which the mobility of the ions can be determined as compared to known multiplexing methods and apparatuses as illustrated in the context of Figures 5a, 5b, 6a and 6b. In single pulse methods and apparatuses for determining the mobility of the ions however, calculating the second derivative of the measured time of flight of the ions does not increase the accuracy with which the mobility of the ions can be determined. This illustrated by the following thought experiment:

Assuming the mobility of one single type of ions is determined with a single pulse method and apparatus. In this case, the ion gate 2 is switched to its open state and shorty after to its closed state such that an essentially rectangular shaped bunch of ions is inserted into the ion separation region 3. During passing the ion separation region 3, the ions experience some diffusional broadening and some coulombic broadening which smears over the initially rectangular shape of the bunch of ions. The signal obtained with the detector 4 thus shows this smeared rectangular shape of the bunch of ions reaching the detector 4. Thus, in case the second derivative of the measured time of flight of the ions is calculated, the second derivative of the smeared rectangular shape is calculated.

In comparison, when assuming the mobility of one single type of ions is determined with the apparatus 1 and the method according to the invention, the ion gate 2 is operated according to the modulation function in order to generate the modulated ion beam, the modulated ion beam is passed through the ion separation region 3 and the signal of the ions of the modulated ion beam is obtained with the detector 4 after the modulated ion beam has passed the ion separation region 3. Then, in one variant, the modulation function is correlated with the signal as described in WO 2013/059947 A1 of Tofwerl< AG in order to obtain the ion mobility spectrum and afterwards, the second derivative with respect to time of the obtained correlation is calculated. In this case, the resulting correlation is a single peak with a maximum at the position in time corresponding to the mobility of the particular type of ions. In case the diffusional broadening is neglected, the resulting single peak has triangular shape as shown in Figure 2 of WO 2013/059947 A1. In case the diffusional broadening is considered, the triangular shape of the peak is smeared over with the diffusional broadening. Thus, in this variant, the obtained correlation being the ion mobility spectrum shows one peak having a smeared triangular shape. Consequently, in case the second derivative of this correlation is calculated as it is done according to the present invention, the second derivative of the smeared triangular shape is calculated. In case of another variant, in order to calculate the second derivative with respect to time of the correlation of the at least one segment of the modulation function and the signal in order to determine the mobility of the ions, the first derivative with respect to time of the at least one segment of the modulation function is correlated with the signal and subsequently, the first derivative with respect to time of the result is calculated. In this other variant, the same curve being the second derivative of the smeared triangular shape, even though with changed sign, is obtained because it is irrelevant whether the correlation of the first derivative of the at least one segment of the modulation function with the signal is calculated, whereafter the first derivative of the result is calculated, or whether the correlation of the modulation function with the signal is calculated, whereafter the second derivative of the correlation is calculated and the sign of the result is changed in order to mirror the result about the abscissa. Thus, in case the second derivative of the correlation of the at least one segment of the modulation function with the signal is calculated as it is done according to the present invention, the resulting curve is the second derivative of the smeared triangular shape.

Figures 7a to 7e illustrate what happens if the second derivative of the measured time of flight of the ions is calculated in the case of a single pulse method, where the second derivative of the smeared rectangular shape is calculated, in comparison to what happens if the second derivative with respect to time of the correlation of the at least one segment of the modulation function with the signal is calculated as it is done according to the present invention, where the second derivative of the smeared triangular shape is calculated.

Figure 7a shows the rectangular shaped pulse of ions as a dashed line in comparison to the triangular shape of the correlation of the modulation function with the signal as a continuous line, both when neglecting the diffusional broadening and the coulombic broadening. Thereby, the axis of abscissas is provided in segments, which is in time units, while the axis of ordinate is provided as an intensity in arbitrary units. Thus, the dashed line is the outcome of the ion mobility spectrum for a single type of ions when employing a single pulse method under the assumption that there is no diffusional broadening and no coulombic broadening. The continuous line is the outcome of the ion mobility spectrum being the correlation of the modulation function with the signal for the same single type of ions when employing a known multiplexing method under the assumption that there is no diffusional broadening. - It is to be noted that due to the calculated correlation, the coulombic broadening drops out anyway.

Figure 7b shows the curves of Figure 7a when assuming a strong diffusional broadening, wherein in Figure 7b, the axis of abscissas is now provided in arrival time of the ions at the detector 4 after having passed the ion gate 2. Eventually, the two curves are essentially the same. There is no significant difference between the single pulse method and the multiplexing method.

Figure 7c shows the curves of Figure 7a when assuming a very small diffusional broadening, wherein in Figur 7c, the axis of abscissas is provided in arrival time of the ions at the detector 4 after having passed the ion gate 2. Eventually, the two curves differ quite significantly. The dashed line representing the result from the single pulse method shows a broad bump having an almost rectangular shape. Thus, this is the smeared rectangular shaped ion mobility spectrum for the single type of ions obtained with single pulse method. The continuous line representing the result from the known multiplexing method shows nearly a triangular peak. Thus, this is the smeared triangular shaped ion mobility spectrum for the single type of ions obtained with multiplexing method.

Figure 7d shows the second derivative of the curves shown in Figure 7b with changed signs. Eventually, the two curves are essentially the same. There is no significant difference between the single pulse method and the multiplexing method.

Figure 7e shows the second derivative of the curves shown in Figure 7c with changed signs. Eventually, the dashed curve representing the result from the single pulse method shows two peaks. Due to this splitting of the curve into two peaks, the ion mobility can no longer be determined with high accuracy. The continuous curve representing the result from the method according to the invention however still shows only one sharp peak enabling determining the ion mobility with a high accuracy.

As mentioned before, single pulse methods and apparatuses only have a limited throughput of ions, resulting in a low sensitivity of the measurement. In case the throughput of ions is increased while the pulse duration in time is maintained the same, the coulombic broadening is increased, resulting in a reduced resolution and a reduced accuracy with which the mobility of the ions can be determined. In case the second derivative of the obtained ion mobility spectra is calculated, the ion mobility can still be determined but the coulombic broadening still limits the resolution and the accuracy with which the mobility of the ions can be determined. Furthermore, the risk of a saturation of the ion separation region and the risk of a saturation of the detector are still imminent. In case the pulse duration in time is increased in order to reduce the coulombic broadening and in order to reduce the risk for a saturation of the ion separation region and to reduce the risk for a saturation of the detector, the coulombic broadening is avoided while the diffusional broadening remains. At some point, this diffusional broadening becomes too small as compared to the duration in time of the pulse, such that when calculating the second derivative of the obtained ion mobility spectra, the peak splits as shown in Figure 7e such that the accuracy with which the mobility of the ions can be determined is ruined.

Surprisingly however, with the apparatus 1 and the method according to the invention, the throughput of ions can be increased considerably due to its multiplexing properties while at the same time, with calculating the second derivative, no doubling of the peaks occurs such that the mobility of the ions can be determined with an improved resolution and accuracy as compared to known multiplexing methods. Thus, the method and the apparatus according to the invention enable an increased throughput of ions and thus an increased sensitivity with which a sample can be analysed as compared to the known single pulse methods and apparatuses. At the same time, the method and the apparatus according to the invention enable to improve the resolution and the accuracy with which the mobility of the ions can be determined as compared to the known multiplexing methods and apparatuses.

The invention is not limited to the embodiments described above in the context of the Figures. For example, the method may further include a step of enhancing edges of the signal with a filter by filtering the signal before calculating the second derivative with respect to time of the correlation of the at least one segment of the modulation function with the signal in order to determine the mobility of the ions. In this case, the filter for enhancing edges of the signal is advantageously applicable by the calculation unit to the signal. In one variant, the filter is an n-element finite difference filter, edge enhancement filter, or a filter using a different type of sharpening algorithm. In case the filter is an edge enhancement filter, the filter may comprise an algorithm where a blurred signal is calculated by convoluting the signal with a Gaussian, and where the difference between the signal and the blurred signal is added to the signal.

Independent of whether the method includes a step of enhancing edges of the signal with a filter by filtering the signal before calculating the second derivative with respect to time of the correlation of the at least one segment of the modulation function with the signal in order to determine the mobility of the ions or not, in a variation, the steps of the method except calculating the second derivative with respect to time of the correlation of the at least one segment of the modulation function and the signal are repeated in cycles, wherein during each cycle, the ion beam is modulated to the modulated ion beam by operating the ion gate according to the modulation function for generating the modulated ion beam, wherein the modulated ion beam is passed through the ion separation region for separating the ions of the modulated ion beam according to the mobility of the ions in that ions of the modulated ion beam having different mobilities take different times for passing the ion separation region, wherein the signal of the modulated ion beam is obtained after the modulated ion beam has passed the ion separation region. In this variation, for each repeated cycle, the signal of the modulated ion beam obtained after the modulated ion beam has passed the ion separation region during the respective repeated cycle is added to a total signal being the added signals obtained during executing the previous one or more cycles. Thus, the resulting total signal provides an improved statistic as compared to performing the steps of the method only once. Subsequently, the second derivative with respect to time of the correlation of the at least one segment of the respective modulation function with the total signal is calculated. In this variation, the apparatus advantageously further includes a signal summation unit by which the total signal is calculable. In another variation, the steps of the method are repeated in cycles, wherein during each cycle, the ion beam is modulated to the modulated ion beam by operating the ion gate according to a different modulation function from a set of modulation functions for generating a different modulated ion beam, and wherein during each cycle, the second derivative with respect to time of the correlation of the at least one segment of the respective modulation function with the signal which is calculated during each one of the cycles is added to a total result in order to determine the mobility of the ions. In this case, as shown in Figure 1a, the apparatus 1 includes a cycle control unit 8 by which a repetition in cycles of steps is controllable, the steps including generating the modulated ion beam with the ion gate 2 by operating the ion gate 2 according to the modulation function, passing the modulated ion beam through the ion separation region 3, obtaining the signal with the detector 4 and calculating with the calculation unit 5 from the signal and the at least one segment of the modulation function the second derivative with respect to time of the correlation of the at least one segment of the modulation function with the signal in order to determine the mobility of the ions. Thereby, the apparatus 1 further includes a summation unit 9 by which a total second derivative with respect to time of the correlation of the at least one segment of the modulation function and the signal is calculable in order to determine the mobility of the ions, the total second derivative with respect to time of the correlation of the at least one segment of the modulation function with the signal being a sum of the second derivative with respect to time of the correlation of the at least one segment of the modulation function with the signal calculated during the cycles. In this variation, the cycle control unit 8 may be a separate unit as shown in Figure 1a or may for example be incorporated in the control unit 7. Similarly, the summation unit 9 may be a separate unit as shown in Figure 1a or may for example be incorporated in the calculation unit 5.

In case no such repetitions of the steps in cycles is required, the apparatus 1 may as well go without cycle control unit 8 and without summation unit 9.

In summary, it is to be noted that a method and an apparatus for determining the mobility of ions pertaining to the technical field initially are provided that enable an increased throughput of ions and thus an increased sensitivity with which a sample can be analysed as compared to the I<nown single pulse methods and apparatuses and that enable at the same time to improve the resolution and the accuracy with which the mobility of the ions can be determined as compared to the I<nown multiplexing methods and apparatuses.

**Claims**

1. A method for determining a mobility of ions, including:

   a) a step of modulating with an ion gate (2) an ion beam (6) to a modulated ion beam by operating said ion gate (2) according to a modulation function for generating said modulated ion beam,
   b) a step of passing said modulated ion beam through an ion separation region (3) for separating the ions of said modulated ion beam according to a mobility of the ions in that ions of said modulated ion beam having different mobilities take different times for passing said ion separation region (3),
   c) a step of obtaining a signal of said modulated ion beam after said modulated ion beam has passed said ion separation region (3), and
   d) a step of calculating from said signal and at least one segment of said modulation function a second derivative with respect to time of a correlation of said at least one segment of said modulation function with said signal in order to determine said mobility of said ions.

2. The method according to claim 1, **characterised by** a step of correlating a first derivative with respect to time of said at least one segment of said modulation function with said signal for calculating said second derivative with respect to time of said correlation of said at least one segment of said modulation function with said signal in order to determine said mobility of said ions.

3. The method according to claim 2, **characterised in that** said modulation function is a binary function, wherein, for correlating said first derivative with respect to time of said at least one segment of said modulation function with said signal, said signal is evaluated at positions in time in said at least one segment of said modulation function, wherein said positions in time correspond to positions within said at least one segment of said modulation function at which said modulation function changes its value.

4. The method according to claim 1, **characterised in that** for calculating said second derivative with respect to time of said correlation of said at least one segment of said modulation function with said signal in order to determine said mobility of said ions, said correlation of said at least one segment of said modulation function with said signal is calculated, whereafter said second derivative with respect to time of said correlation is calculated.

5. The method according to one of claims 1 to 4, **characterised in that** an autocorrelation of said modulation function is a two-valued function.

6. The method according to one of claims 1 to 5, **characterised in that** said modulation function is a pseudorandom sequence.

7. An apparatus (1) for determining a mobility of ions, in particular with the method according to one of claims 1 to 6, the apparatus (1) including:

   a. an ion gate (2) which is operable according to a modulation function for generating from an ion beam (6) a modulated ion beam,
   b. an ion separation region (3) through which said modulated ion beam is passable for separating the ions of said modulated ion beam according to a mobility of the ions in that ions of said modulated ion beam having different mobilities take different times for passing said ion separation region (3),
   c. a detector (4) by which a signal of said modulated ion beam is obtainable after said modulated ion beam has passed said ion separation region (3), and
   d. a calculation unit (5) by which from said signal and at least one segment of said modulation function a second derivative with respect to time of a correlation of said at least one segment of said modulation function with said signal is calculable in order to determine said mobility of said ions.

8. The apparatus (1) according to claim 7, **characterised in that** the calculation unit (5) is adapted to correlate a first derivative with respect to time of said at least one segment of said modulation function with said signal for calculating said second derivative with respect to time of said correlation of said at least one segment of said modulation function with said signal in order to determine said mobility of said ions.

9. The apparatus (1) according to claim 8, **characterised in that** said modulation function is a binary function and **in that** said calculation unit (5) is adapted to correlate said first derivative with respect to time of said at least one segment of said modulation function with said signal by evaluating said signal at positions of said modulation function in said at least one segment of said modulation function where said modulation function changes its value.

10. The apparatus (1) according to claim 7, **characterised in that** said calculation unit (5) is adapted to calculate said correlation of said at least one segment of said modulation function with said signal and to calculate said second derivative with respect to time of said correlation in order to calculate said second derivative with respect to time of said correlation of said at least one segment of said modulation function with said signal in order to determine said mobility of said ions.

11. The apparatus (1) according to one of claims 7 to 10, **characterised by** a linear feedbacl< shift register (30) by which a pseudorandom sequence is generatable for the use as said modulation function.

12. The apparatus (1) according to one of claims 7 to 11, **characterised by**

   a. a cycle control unit (8) by which a repetition in cycles of steps is controllable, said steps including generating said modulated ion beam with said ion gate (2) by operating said ion gate (2) according to said modulation function, passing said modulated ion beam through said ion separation region (3), obtaining said signal with said detector (4) and calculating with said calculation unit (5) from said signal and said at least one segment of said modulation function said second derivative with respect to time of said correlation of said at least one segment of said modulation function with said signal in order to determine said mobility of said ions, and
   b. a summation unit (9) by which a total second derivative with respect to time of said correlation of said at least one segment of said modulation function with said signal is calculable in order to determine said mobility of said ions, said total second derivative with respect to time of said correlation of said at least one segment of said modulation function with said signal being a sum of said second derivative with respect to time of said correlation of said at least one segment of said modulation function with said signal calculated during said cycles.

**13.** The apparatus (1) according to one of claims 7 to 12, **characterised in that** said detector (4) is a mass analyser.

**14.** The apparatus (1) according to claim 13, **characterised in that** said mass analyser is a time-of-flight mass analyser.

**15.** The apparatus (1) according to claim 13 or 14, **characterised in that** said mass analyser allows for determining ion mass spectra with a repetition rate that corresponds to a time resolution with which the mobility of the ions can be determined or to a fraction thereof.

**Fig. 1a**

**Fig. 1b**

Fig. 2

Fig. 7a

Fig. 7b

Fig. 7c

Fig. 7d

Fig. 7e

Fig. 3

Fig. 4

**Fig. 5a**

**Fig. 5b**

Fig. 6a

Fig. 6b

Europäisches
Patentamt

European
Patent Office

Office européen
des brevets

# EUROPEAN SEARCH REPORT

**Application Number**

EP 24 16 1473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/059947 A1 (TOFWERK AG [CH]; KNOCHENMUSS RICHARD [CH]) 2 May 2013 (2013-05-02) * the whole document * | 1-15 | INV. G01N27/623 |
| Y | WAHAB M FAROOQ ET AL: "Discrete Fourier transform techniques for noise reduction and digital enhancement of analytical signals", TRAC TRENDS IN ANALYTICAL CHEMISTRY, ELSEVIER, AMSTERDAM, NL, vol. 143, 31 May 2021 (2021-05-31), XP086800255, ISSN: 0165-9936, DOI: 10.1016/J.TRAC.2021.116354 [retrieved on 2021-05-31] * the whole document * | 1-15 | |
| Y | US 8 480 110 B2 (GORENSTEIN MARC V [US]; LI GUO-ZHONG [US] ET AL.) 9 July 2013 (2013-07-09) * the whole document * | 1-15 | |
| Y | LAWRENCE A H ET AL: "IDENTIFICATION OF WOOD SPECIES BY ION MOBILITY SPECTROMETRY", ANALYTICAL CHEMISTRY, AMERICAN CHEMICAL SOCIETY, US, vol. 63, no. 13, 1 July 1991 (1991-07-01), pages 1217-1221, XP000244505, ISSN: 0003-2700, DOI: 10.1021/AC00013A007 * the whole document * | 1-15 | TECHNICAL FIELDS SEARCHED (IPC) G01N |

The present search report has been drawn up for all claims

| Place of search | Date of completion of the search | Examiner |
|---|---|---|
| Munich | 19 August 2024 | De Masi, Rita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**

**ON EUROPEAN PATENT APPLICATION NO.**                    EP 24 16 1473

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | | Publication date | Patent family member(s) | | Publication date |
|---|---|---|---|---|---|
| WO 2013059947 | A1 | 02-05-2013 | CN | 104024844 A | 03-09-2014 |
| | | | EP | 2587259 A1 | 01-05-2013 |
| | | | EP | 2771681 A1 | 03-09-2014 |
| | | | EP | 3457126 A1 | 20-03-2019 |
| | | | JP | 6193867 B2 | 06-09-2017 |
| | | | JP | 2014532960 A | 08-12-2014 |
| | | | US | 2014326869 A1 | 06-11-2014 |
| | | | US | 2016320341 A1 | 03-11-2016 |
| | | | WO | 2013059947 A1 | 02-05-2013 |
| US 8480110 | B2 | 09-07-2013 | CN | 101534933 A | 16-09-2009 |
| | | | EP | 2024064 A2 | 18-02-2009 |
| | | | HK | 1135058 A1 | 28-05-2010 |
| | | | JP | 5542433 B2 | 09-07-2014 |
| | | | JP | 2009539067 A | 12-11-2009 |
| | | | US | 2009294645 A1 | 03-12-2009 |
| | | | US | 2012259557 A1 | 11-10-2012 |
| | | | US | 2014025342 A1 | 23-01-2014 |
| | | | WO | 2007140327 A2 | 06-12-2007 |

EPO FORM P0459

For more details about this annex : see Official Journal of the European Patent Office, No. 12/82

**EP 4 614 140 A1**

## REFERENCES CITED IN THE DESCRIPTION

**Patent documents cited in the description**

- EP 3561853 A1
- EP 4095525 A1
- WO 2013059947 A1